(19) 

Europäisches
Patentamt
European
Patent Office
Office européen
des brevets

(11) **EP 4 271 052 A1**

(12) **EUROPEAN PATENT APPLICATION**
published in accordance with Art. 153(4) EPC

(43) Date of publication:
**01.11.2023 Bulletin 2023/44**

(21) Application number: **21909499.2**

(22) Date of filing: **23.12.2021**

(51) International Patent Classification (IPC):
***H04W 52/02*** *(2009.01)*

(52) Cooperative Patent Classification (CPC):
**H04W 52/02; H04W 52/18; H04W 64/00**

(86) International application number:
**PCT/CN2021/140733**

(87) International publication number:
**WO 2022/135504 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.12.2020 CN 202011546194**

(71) Applicant: **Vivo Mobile Communication Co., Ltd.
Dongguan, Guangdong 523863 (CN)**

(72) Inventors:
• **WANG, Yuanyuan
Dongguan, Guangdong 523863 (CN)**

• **MO, Yitao
Dongguan, Guangdong 523863 (CN)**
• **ZHUANG, Zixun
Dongguan, Guangdong 523863 (CN)**
• **WU, Huaming
Dongguan, Guangdong 523863 (CN)**
• **SI, Ye
Dongguan, Guangdong 523863 (CN)**

(74) Representative: **Murgitroyd & Company
Murgitroyd House
165-169 Scotland Street
Glasgow G5 8PL (GB)**

(54) **UPLINK POSITIONING PROCESSING METHOD AND RELATED DEVICE**

(57)    This application discloses an uplink positioning processing method and a related device. The method includes: receiving, by a terminal, first configuration information transmitted by a network device; and determining, by the terminal, target information of a first positioning reference signal based on the first configuration information, where the first configuration information includes at least one of power configuration information and spatial relation configuration information, the target information includes a transmit power in a case that the first configuration information includes the power configuration information, the target information includes a spatial relation in a case that the first configuration information includes the spatial relation configuration information, and the first positioning reference signal is used for the terminal to perform uplink positioning in an idle state or an inactive state.

FIG. 2

**Description**

**CROSS-REFERENCE TO RELATED APPLICATION**

This application claims priority to Chinese Patent Application No. 202011546194.7, filed in China on December 23, 2020, which is incorporated herein by reference in its entirety.

**TECHNICAL FIELD**

This application belongs to the field of communications technologies, and in particular, to an uplink positioning processing method and a related device.

**BACKGROUND**

With the development of communications technologies, positioning functions are increasingly improved. Currently, in a case that a terminal is in a connected state, a network device usually configures a positioning reference signal used for the connected state, to implement uplink positioning in a case that the terminal is in the connected state. In a case that the terminal is in an idle (Idle) state or an inactive (inactive) state, the terminal needs to re-enter the connected state to perform positioning. As a result, power consumption of positioning by the terminal is high.

**SUMMARY**

The embodiments of this application provide an uplink positioning processing method and a related device, to resolve a problem that power consumption of positioning by a terminal is high.

According to a first aspect, an uplink positioning processing method is provided, including:

receiving, by a terminal, first configuration information transmitted by a network device; and
determining, by the terminal, target information of a first positioning reference signal based on the first configuration information, where
the first configuration information includes at least one of power configuration information and spatial relation configuration information, the target information includes a transmit power in a case that the first configuration information includes the power configuration information, the target information includes a spatial relation in a case that the first configuration information includes the spatial relation configuration information, and the first positioning reference signal is used for the terminal to perform uplink positioning in an idle state or an inactive state.

According to a second aspect, an uplink positioning processing method is provided, including:

transmitting, by a network device, first configuration information, where the first configuration information is used for determining target information of a first positioning reference signal, where
the first configuration information includes at least one of power configuration information and spatial relation configuration information, the target information includes a transmit power in a case that the first configuration information includes the power configuration information, the target information includes a spatial relation in a case that the first configuration information includes the spatial relation configuration information, and the first positioning reference signal is used for a terminal to perform uplink positioning in an idle state or an inactive state.

According to a third aspect, an uplink positioning processing apparatus is provided, including:

a first receiving module, configured to receive, by a terminal, first configuration information transmitted by a network device; and
a determining module, configured to determine, by the terminal, target information of a first positioning reference signal based on the first configuration information, where
the first configuration information includes at least one of power configuration information and spatial relation configuration information, the target information includes a transmit power in a case that the first configuration information includes the power configuration information, the target information includes a spatial relation in a case that the first configuration information includes the spatial relation configuration information, and the first positioning reference signal is used for the terminal to perform uplink positioning in an idle state or an inactive state.

According to a fourth aspect, an uplink positioning processing apparatus is provided, including:

a first transmitting module, configured to transmit, by a network device, first configuration information, where the first configuration information is used for determining target information of a first positioning reference signal, where the first configuration information includes at least one of power configuration information and spatial relation configuration information, the target information includes a transmit power in a case that the first configuration information includes the power configuration information, the target information includes a spatial relation in a case that the first configuration information includes the spatial relation configuration information, and the first positioning reference signal is used for a terminal to perform uplink positioning in an idle state or an inactive state.

According to a fifth aspect, a terminal is provided, where the terminal includes a processor, a memory, and a program or instructions stored in the memory and executable on the processor, and when the program or instructions are executed by the processor, the steps of the method according to the first aspect are implemented.

According to a sixth aspect, a network device is provided, where the network device includes a processor, a memory, and a program or instructions stored in the memory and executable on the processor, and when the program or instructions are executed by the processor, the steps of the method according to the second aspect are implemented.

According to a seventh aspect, a readable storage medium is provided, where the readable storage medium stores a program or instructions, and when the program or instructions are executed by a processor, the steps of the method according to the first aspect are implemented, or the steps of the method according to the second aspect are implemented.

According to an eighth aspect, an embodiment of this application provides a chip, where the chip includes a processor and a communications interface, the communications interface is coupled to the processor, and the processor is configured to execute a program or instructions for a network device, to implement the method according to the second aspect.

According to a ninth aspect, an embodiment of this application provides a computer program product, where the computer program product is stored in a non-transitory storage medium, and the computer program product is executed by at least one processor to implement the steps of the method according to the first aspect, or implement the steps of the method according to the second aspect.

According to a tenth aspect, an embodiment of this application provides a communications device, where the communications device is configured to perform the steps of the method according to the first aspect, or perform the steps of the method according to the second aspect.

In the embodiments of this application, the terminal receives the first configuration information transmitted by the network device; and the terminal determines the target information of the first positioning reference signal based on the first configuration information, where the first configuration information includes at least one of the power configuration information and the spatial relation configuration information, the target information includes the transmit power in a case that the first configuration information includes the power configuration information, the target information includes the spatial relation in a case that the first configuration information includes the spatial relation configuration information, and the first positioning reference signal is used for the terminal to perform uplink positioning in the idle state or the inactive state. In this way, in a case that the terminal is in the idle state or the inactive state, the terminal can transmit an uplink positioning reference signal based on the determined target information, to prevent the terminal from switching to a connected state for transmitting a positioning reference signal. Therefore, power consumption and a delay of positioning by the terminal are reduced in the embodiments of this application.

**BRIEF DESCRIPTION OF THE DRAWINGS**

FIG. 1 is a structural diagram of a network system to which an embodiment of this application is applicable;
FIG. 2 is a flowchart of an uplink positioning processing method according to an embodiment of this application;
FIG. 3 is a schematic flowchart of cell handover in an uplink positioning processing method according to an embodiment of this application;
FIG. 4 is a flowchart of another uplink positioning processing method according to an embodiment of this application;
FIG. 5 is a structural diagram of an uplink positioning processing apparatus according to an embodiment of this application;
FIG. 6 is a structural diagram of another uplink positioning processing apparatus according to an embodiment of this application;
FIG. 7 is a structural diagram of a communications device according to an embodiment of this application;
FIG. 8 is a structural diagram of a terminal according to an embodiment of this application; and

FIG. 9 is a structural diagram of a network device according to an embodiment of this application.

## DETAILED DESCRIPTION

The following clearly and completely describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects instead of describing a specific order or sequence. It should be understood that the data used in this way is interchangeable in appropriate circumstances, so that the embodiments of this application can be implemented in other orders than the order illustrated or described herein. In addition, the objects distinguished by "first" and "second" usually belong to one category, and the number of objects is not limited. For example, there may be one or more first objects. In addition, in the specification and claims, "and/or" represents at least one of connected objects, and the character "/" typically represents an "or" relationship between the associated objects.

It should be noted that the technologies described in the embodiments of this application are not limited to a long term evolution (Long Term Evolution, LTE)/LTE-advanced (LTE-Advanced, LTE-A) system, and may be further used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used in the aforementioned systems and radio technologies, and may also be used in other systems and radio technologies. In the following descriptions, a new radio (New Radio, NR) system is described for an illustration purpose, and NR terms are used in most of the following descriptions. However, these technologies may also be applied to applications other than an NR system application, for example, a 6th generation (6th Generation, 6G) communications system.

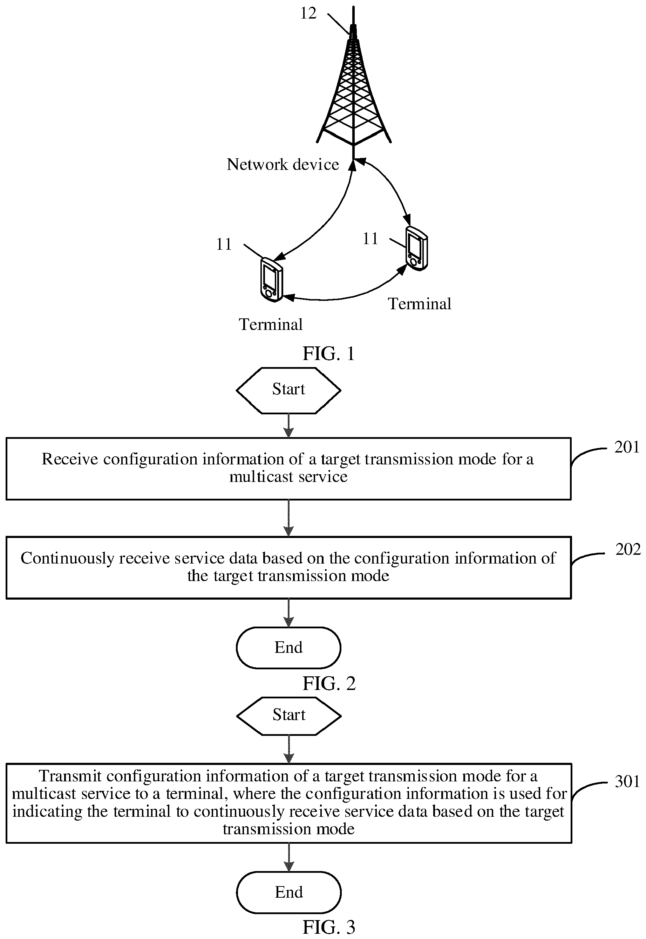

FIG. 1 is a block diagram of a wireless communications system to which an embodiment of this application is applicable. The wireless communications system includes a terminal 11 and a network device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (VUE), or pedestrian user equipment (PUE). The wearable device includes a band, a headset, glasses, or the like. It should be noted that a specific type of the terminal 11 is not limited in the embodiments of this application. The network device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. Provided that the same technical effect is achieved, the base station is not limited to a specific technical term. It should be noted that the base station in the NR system is only used as an example in the embodiments of this application, but a specific type of the base station is not limited. A core network device may be referred to as a location management function (Location Management Function, LMF), an enhanced serving mobile location center (Enhanced Serving Mobile Location Center, E-SMLC), a location server, or another appropriate term in the art.

For ease of understanding, the following describes some content included in the embodiments of this application.

1. Terminal states include three states: an idle state, an inactive state, and a connected (connected) state. The connected state may also be referred to as a radio resource control connected (Radio Resource Control connected, RRC_connected) state.

UE in an idle state has no RRC context on a network device. That is, a parameter required for communication between the network device and the UE does not belong to a specific cell, and the network device does not know whether the UE exists either. A tracking area identifier list (Tracking area identifier, TAI list) is allocated to the UE. From a perspective of a core network, a radio access network (Radio Access Network, RAN) side is disconnected from the core network. To reduce power consumption, the UE is in a dormant state in most of the time, and therefore cannot transmit data. In downlink, the UE in the idle state may be periodically woken up to receive a paging message from the network device. Mobility (Mobility) may be implemented by the UE through cell reselection. In the idle state, no uplink synchronization is retained between the UE and the network device. If the idle state needs to be switched to the connected state, an RRC context may be established between the UE and the network device only through random access (Random Access).

In the RRC_connected state, an RRC context may be established, and all parameters required for communication are known to both entities (the UE and the network device). From a perspective of the core network, the UE is in a CN_connected state. A cell to which the UE belongs is known, and a transmission signaling destination device identifier, namely, a cell radio network temporary identifier (Cell Radio Network Temporary Identifier, C-RNTI), used between a device and a network is configured. In the connected state, mobility (Mobility) may be controlled by the network device. That is, the UE provides neighbor cell measurement for the network device, and the network device instructs the terminal to perform handover (handover). Uplink time synchronization may or may not be retained. In a case that data needs to be transmitted, uplink synchronization may be established through random access.

In the RRC_inactive state, an RRC context between the network device and the UE is retained. From a perspective of the core network, the RAN side and the core network are in a connected state. Therefore, the inactive state can be quickly switched to the connected state without using core network signaling. In addition, the UE is allowed to be dormant in a manner similar to that in the idle state, and mobility is implemented through cell reselection. Therefore, the RRC_inactive state may be considered as a combination of the idle state and the connected state.

Therefore, an important difference between different states lies in a mobility (mobility) mechanism used. Efficient mobility implementation is a key part of any mobile communications system. In the idle state and the inactive state, mobility is implemented by the terminal through cell reselection. In the connected state, mobility is implemented by the network device based on measurement by the UE.

The UE is recovered to the RRC_connected state in the following five scenarios: Data is to be transmitted in uplink; a signaling procedure is initiated at a non-access stratum (Non-Access Stratum, NAS) layer; a response is provided for RAN paging (paging); a notification network device has left a radio access network notification area (RAN notification area); or a periodic radio access network notification area update timer (update timer) expires.

2. Power control and spatial relation of an uplink positioning reference signal in a connected state

The uplink positioning reference signal may be a sounding reference signal (Sounding Reference Signal, SRS), where time domain types of the uplink positioning reference signal include periodic, aperiodic, and semi-persistent. Optionally, first configuration information may be configured for each SRS resource set, where this may be understood as configuration per SRS resource set; or first configuration information may be configured for each SRS resource.

A path loss reference signal is used for obtaining path loss estimation of an SRS, including a synchronization signal block (Synchronization Signal and PBCH block, SSB) of a serving cell, an SSB of a neighbor cell, a CSI-RS, a downlink signal such as a downlink positioning reference signal (Positioning Reference Signal, PRS), or another SRS.

3. Random access process

4-step random access may be referred to as a 4-step random access channel (4 step Random Access Channel, RACH), and specifically includes:

a contention-based random access process; and
a non-contention-based random access process.

In the "contention-based random access process", UE transmits a message 1 (Msg1) to a network device. After receiving the Msg1, the network device transmits an Msg2 to the UE, where the message carries uplink grant (uplink grant) information. The UE transmits an Msg3 based on the uplink grant information in the Msg2. After receiving the Msg3, the network device transmits an Msg4 (for example, a contention resolution identifier) to the UE. The UE receives the Msg4, and determines whether contention is successfully resolved. If the contention is successfully resolved, the random access process succeeds; otherwise, the UE re-initiates a random access process.

In the "non-contention-based random access process", a network device allocates a dedicated RACH resource to the UE for access. The UE transmits an Msg1 (a random access request) to the network device on the dedicated resource. After receiving the Msg1, the network device transmits an Msg2 message to the UE. However, when dedicated RACH resources are insufficient, the network device instructs the UE to initiate contention-based random access (Random Access, RA).

A 2-step RACH includes the following steps:

1. A network device configures new 2-step random access configuration information for UE, for example, including transmission resource information corresponding an MsgA and an MsgB.
2. The UE triggers a 2-step RACH process. The UE transmits a request message (MsgA) to the network device, for example, through a Physical Uplink Shared Channel (physical uplink shared channel, PUSCH). In addition, the UE may also transmit physical random access channel (Physical Random Access Channel, PRACH) information to the network device.

3. The network device transmits an acknowledgement message (MsgB) to the UE. If the UE fails to receive the MsgB, the UE re-transmits an MsgA.

4. Uplink positioning process

The uplink positioning process includes the following steps:

1. A location management function (Location Management Function, LMF) and a TRP exchange configuration information.

2. The LMF and UE exchange capability information.

3. A new radio positioning protocol A (New Radio Positioning Protocol A, NRPPa) positioning request is initiated.

4. A base station determines an uplink (Uplink, UL) SRS configuration.

5. An NRPPa positioning response is received.

6. An NRPPa positioning activation request is initiated, the base station activates SRS transmission, and an NRPPa positioning activation response is received.

7. An NRPPa measurement request is initiated.

8. The base station performs UL SRS measurement.

9. An NRPPa measurement response is received.

The following describes in detail an uplink positioning processing method provided in the embodiments of this application with reference to the accompanying drawings and by using specific embodiments and application scenarios thereof.

FIG. 2 is a flowchart of an uplink positioning processing method according to an embodiment of this application. The method is performed by a terminal, and as shown in FIG. 2, includes the following steps:

Step 201: The terminal receives first configuration information transmitted by a network device.

Step 202: The terminal determines target information of a first positioning reference signal based on the first configuration information.

The first configuration information includes at least one of power configuration information and spatial relation configuration information. The target information includes a transmit power in a case that the first configuration information includes the power configuration information. The target information includes a spatial relation in a case that the first configuration information includes the spatial relation configuration information. The first positioning reference signal is used for the terminal to perform uplink positioning in an idle state or an inactive state.

In this embodiment of this application, the first positioning reference signal may be understood as an uplink positioning reference signal, and may specifically include a preamble (Preamble), an SRS, or another newly defined reference signal used for uplink positioning. The SRS may be used as an example for description in the following embodiments.

It should be understood that the power configuration information and the spatial relation configuration information may be carried in a same command or a same message, or may be carried in different commands or different messages. This is not further limited herein. It should be further understood that the first configuration information may further carry information other than the power configuration information and the spatial relation configuration information. The target information of the first positioning reference signal is determined by using the first configuration information. In this way, the terminal can transmit the first positioning reference signal based on the target information in the idle state or the inactive state, and therefore the terminal can perform uplink positioning in the idle state or the inactive state.

It should be noted that the terminal may determine the target information in a connected state, or may determine the target information in the idle state or the inactive state. This is not further limited herein.

It should be noted that the terminal may receive the first configuration information in the connected state, or may receive the first configuration information in the idle state or the inactive state.

In this embodiment of this application, the terminal receives the first configuration information transmitted by the network device; and the terminal determines the target information of the first positioning reference signal based on the first configuration information, where the first configuration information includes at least one of the power configuration information and the spatial relation configuration information, the target information includes the transmit power in a case that the first configuration information includes the power configuration information, the target information includes the spatial relation in a case that the first configuration information includes the spatial relation configuration information, and the first positioning reference signal is used for the terminal to perform uplink positioning in the idle state or the inactive state. In this way, in a case that the terminal is in the idle state or the inactive state, the terminal can transmit an uplink positioning reference signal based on the determined target information, to prevent the terminal from switching to the connected state for transmitting a positioning reference signal. Therefore, power consumption and a delay of positioning by the terminal are reduced in this embodiment of this application.

Optionally, in some embodiments, the first configuration information includes the power configuration information, and the determining, by the terminal, target information of a first positioning reference signal based on the first configuration information includes:

determining a first bandwidth part (Bandwidth Part, BWP) used for transmitting the first positioning reference signal; and
determining a transmit power of the first positioning reference signal based on the power configuration information and the first BWP.

Optionally, the first BWP may be an active BWP of the terminal in a case that the terminal is in the idle state or the inactive state.

In this embodiment of this application, the first BWP may be an initial active BWP of the terminal in a case that the terminal is in the idle state or the inactive state, or may be an active BWP to which the terminal switches for transmitting a positioning reference signal, for example, may be an active BWP to which the terminal switches for transmitting the first positioning reference signal. It should be noted that after an active BWP is switched, a current active BWP may remain unchanged, or the active BWP may be switched to the initial active BWP after the first positioning reference signal is transmitted. This is not further limited herein.

Optionally, in some embodiments, the first BWP includes at least one of the following BWPs:

an initial BWP;
a dedicated initial BWP, where the dedicated initial BWP is used for performing uplink positioning only in a case that the terminal is in the idle state or the inactive state; and
a BWP for positioning.

In this embodiment of this application, the initial BWP may be understood as an initial BWP configured in a case that the terminal is in the connected state or a non-connected state. The dedicated initial BWP may be referred to as a second initial BWP, and is used for representing an initial active BWP used in a specific situation in a case that the terminal is in the idle state or the inactive state. The specific situation may be a positioning situation, a low power situation, or the like. In a case that the initial BWP and the second initial BWP are the same, this may be understood as that the terminal uses a same initial active BWP in different states. The BWP for positioning may be understood as a BWP used for transmitting the first positioning reference signal. The BWP for positioning may be the same as or different from the initial BWP and/or the dedicated initial BWP. This is not further limited herein.

Optionally, in some embodiments, the method further includes:

receiving second configuration information transmitted by the network device, where
the second configuration information includes at least one of first configuration sub-information and second configuration sub-information used by the terminal in the idle state or the inactive state, the first configuration sub-information is a configuration of the initial BWP, and the second configuration sub-information is a configuration of the dedicated initial BWP or the BWP for positioning.

In this embodiment of this application, the first configuration information and the second configuration information may be carried in a same command or a same message, or may be carried in different commands or different messages. Both the first configuration sub-information and the second configuration sub-information may exist in a case that the terminal is in the idle state or the inactive state. In an embodiment, only one of the first configuration sub-information and the second configuration sub-information is activated, in other words, any one of the first configuration sub-information and the second configuration sub-information is activated in a case that the terminal is in the idle state or the inactive state. In another embodiment, the second configuration information is determined by using both the first configuration sub-information and the second configuration sub-information in a case that the terminal is in the idle state or the inactive state. In still another embodiment, the first configuration sub-information and the second configuration sub-information are used for different purposes. For example, the first configuration sub-information is used for random access and/or paging, and the second configuration sub-information is used for positioning. The purposes may be freely combined. This is not limited herein.

It should be noted that, in this embodiment of this application, the first configuration sub-information and the second configuration sub-information may belong to one configuration unit or two different configuration units.

It should be understood that, when a piece of configuration sub-information is activated, a BWP corresponding to the configuration sub-information is activated, and the terminal may transmit the first positioning reference signal on the currently activated BWP.

This may also be understood as that, when a BWP is activated, corresponding configuration information is activated, and the terminal may transmit the first positioning reference signal on the currently activated BWP based on the corresponding configuration information.

Optionally, in some embodiments, configuration information of the first BWP carries configuration information of a positioning reference signal.

In this embodiment of this application, the configuration information of the positioning reference signal that is carried in the configuration information of the first BWP may include configuration information of a positioning reference signal used for uplink positioning in a case that the terminal is in the idle state or the inactive state, or may include configuration information of a positioning reference signal used for uplink positioning in a case that the terminal is in the connected state. In other words, in this embodiment of this application, the configuration information of the positioning reference signal includes at least one of third configuration sub-information and fourth configuration sub-information in a case that the first BWP is the dedicated initial BWP or the BWP for positioning, where the third configuration sub-information is configuration information of a positioning reference signal used for uplink positioning in a case that the terminal is in the idle state or the inactive state, and the fourth configuration sub-information is configuration information of a positioning reference signal used for uplink positioning in a case that the terminal is in the connected state.

It should be noted that, in this embodiment of this application, the fourth configuration sub-information may include some or all of configurations in the first configuration information; or may further include or only include a configuration, other than the first configuration information, of a positioning reference signal used for uplink positioning in a case that the terminal is in the connected state.

In this embodiment of this application, the configuration information of the first BWP may include a BWP index (ID), BWP common (common) information, and BWP dedicated (dedicated) information. The configuration information of the positioning reference signal may be carried in the BWP dedicated (dedicated) information.

Optionally, in some embodiments, the configuration information of the first BWP further includes at least one of a first enable state identifier and a second enable state identifier in a case that the first BWP is the BWP for positioning, where the first enable state identifier is used for indicating whether the BWP is used for positioning, and the second enable state indicator is used for indicating whether the BWP is used for the idle state or the inactive state.

In this embodiment of this application, optionally, in a case that the first enable state identifier is a first value, this may indicate that BWP configuration information carrying the first enable state identifier is used for positioning; and in a case that the first enable state identifier is a second value, this may indicate that BWP configuration information carrying the first enable identifier is not used for positioning. In this case, a value of the first enable state identifier carried in the configuration information of the first BWP is the first value.

Optionally, in some embodiments, in a case that configuration information of a BWP does not carry the second enable state identifier, it indicates that the configuration information of the BWP is used for the connected state; and in a case that configuration information of a BWP carries the second enable state identifier, it indicates that the configuration information of the BWP is used for the idle state or the inactive state; or in a case that configuration information of a BWP carries the second enable state identifier and the second enable state identifier is a third value, it indicates that the configuration information of the BWP is used for the idle state, the inactive state, or the connected state, or it indicates that the configuration information of the BWP is used only for the inactive state or the connected state; or in a case that configuration information of a BWP carries the second enable state identifier and the second enable state identifier is a fourth value, it indicates that the configuration information of the BWP is used for the connected state.

It should be noted that, in an embodiment, in a case that the second enable state identifier exists, the configuration information of the first BWP may include only the first configuration sub-information or the second configuration sub-information, and whether the configuration information of the first BWP can be used for another state is limited by using the second enable state identifier. Similarly, this may also be understood as that the second enable state identifier may need to be included in the configuration information of the first BWP in a case that the configuration information of the first BWP includes only the first configuration sub-information or the second configuration sub-information.

Similarly, in an embodiment, in a case that the second enable state identifier exists, the configuration information of the positioning reference signal may include only the third configuration sub-information or the fourth configuration sub-information, and whether the configuration information of the positioning reference signal can be used for another state is limited by using the second enable state identifier. Similarly, this may also be understood as that the second enable state identifier may need to be included in the configuration information of the positioning reference signal in a case that the configuration information of the positioning reference signal includes only the third configuration sub-information or the fourth configuration sub-information. Optionally, in some embodiments, configuration information of the first BWP includes at least one of the following: a first enable state identifier, a second enable state identifier, configuration information of the first positioning reference signal, a BWP period, a BWP activation offset, and duration of a BWP activation window, where

the first enable state identifier is used for indicating whether the BWP is used for positioning, and the second enable state indicator is used for indicating whether the BWP is used for the idle state or the inactive state.

Optionally, in some embodiments, the power configuration information includes at least one of the following:

first power configuration sub-information; and
a third enable state identifier, where
the third enable state identifier is used for indicating whether associated power configuration sub-information is used for the idle state or the inactive state of the terminal, or the third enable state identifier is used for indicating whether associated power configuration sub-information is used for the connected state of the terminal.

In this embodiment of this application, the first power configuration sub-information may be power control information used in a case that the terminal is in the connected state, or may be power control information used in a case that the terminal is in the idle state or the inactive state. This is not further limited herein. Optionally, in some embodiments, a function of the first power configuration sub-information may be determined by the third enable state identifier. For example, in a case that the power configuration information includes first power control sub-information and the third enable state identifier, it indicates that the third enable state identifier is associated with the first power control sub-information. In this case, if the third enable state identifier is a first value, this may indicate that the first power control sub-information is used only in a case that the terminal is in the connected state; or if the third enable state identifier is a second value, this may indicate that the first power control sub-information is used for the idle state or a non-idle state. Specifically, that the first power control sub-information is used for the idle state or a non-idle state may be understood as any one of the following:

the first power control sub-information is used only for the idle state or the non-idle state; and
the first power control sub-information is used for the connected state, the idle state, or the non-idle state.

In this embodiment of this application, the first power configuration sub-information may include at least one of the following:

a first power configuration sub-parameter, for example, including at least one of an expected receive power value $P_0$, a power adjustment coefficient $\alpha$, a pre-obtained target power (preamble received target power), a maximum transmit power, and a power ramping (POWER_RAMPING) coefficient; and
a first power path loss reference sub-signal, for example, including at least one of a first SSB, a second SSB, and a PRS, where the first SSB may include serving cell identification information and SSB identification information, and the second SSB may include cell identification information, SSB identification information, and SSB configuration information.

Optionally, in some embodiments, the power configuration information further includes second power configuration sub-information, and the first power configuration sub-information and the second power configuration sub-information meet at least one of the following: being power configurations of different positioning reference signals; and being power configurations of positioning reference signals in different states of the terminal.
It should be understood that, in this embodiment of this application, the third enable state identifier may be included in a piece of configuration sub-information.
In some embodiments, the first power configuration sub-information may be a power configuration of a positioning reference signal 1, and the second power configuration sub-information may be a power configuration of a positioning reference signal 2. The positioning reference signal 1 and the positioning reference signal 2 may be a same positioning reference signal, or may be different positioning reference signals. The first power configuration sub-information may be applicable to the terminal only in the connected state, and the second power configuration sub-information may be applicable to the terminal in the idle state, the inactive state, and the connected state, or the second power configuration sub-information may be applicable to the terminal only in the idle state and the inactive state.
In this embodiment of this application, the second power configuration sub-information may include at least one of the following:

a second power configuration sub-parameter, for example, including at least one of an expected receive power value $P_0$, a power adjustment coefficient $\alpha$, a pre-obtained target power, a maximum transmit power, and a power ramping coefficient; and
a second power path loss reference sub-signal, for example, including at least one of a third SSB, a fourth SSB, and a PRS, where the third SSB may include serving cell identification information and SSB identification information, and the fourth SSB may include cell identification information, SSB identification information, and SSB configuration information.

Optionally, in some embodiments, the first power configuration sub-information is used for a random access

EP 4 271 052 A1

process, and/or the second power configuration sub-information is used for an SRS.

Optionally, in this embodiment of this application, the first power configuration sub-information and the second power configuration sub-information meet any one of the following:

the first power configuration sub-information and the second power configuration sub-information are included in first information, where the first information is serving cell configuration information or medium access control (Medium Access Control, MAC) information;
the first power configuration sub-information is included in second information, and the second power configuration sub-information is included in radio resource control RRC release information or third information, where the second information is system information block (System Information Block, SIB) information, MAC information, or random access channel Rach configuration information, and the third information includes serving cell configuration information, SRS configuration information, physical uplink shared channel PUSCH configuration information, or Rach configuration information; and
a first part of information of a first object is included in Rach configuration information, and a second part of information other than the first part of information in the first object is included in the second information, where
the first object includes at least one of the following: the first power configuration sub-information and the second power configuration sub-information.

Optionally, in some embodiments, the first power configuration sub-information is used for transmitting an SRS in the connected state, and/or the second power configuration sub-information is used for transmitting an SRS in the idle state or the inactive state.

Optionally, in this embodiment of this application, the first power configuration sub-information is included in fourth information, and the second power configuration sub-information is included in RRC release information or third information, where the fourth information includes serving cell configuration information, SRS configuration information, physical uplink shared channel PUSCH configuration information, Rach configuration information, or MAC information, and the third information includes serving cell configuration information, SRS configuration information, PUSCH configuration information, or Rach configuration information.

Optionally, in some embodiments, the spatial relation configuration information includes at least one of the following:

first spatial relation configuration sub-information; and
a fourth enable state identifier, where
the fourth enable state identifier is used for indicating whether associated spatial relation configuration sub-information is used for the idle state or the inactive state of the terminal.

In this embodiment of this application, the first spatial relation configuration sub-information may be spatial relation configuration information used in a case that the terminal is in the connected state, or may be spatial relation configuration information used in a case that the terminal is in the idle state or the inactive state. This is not further limited herein. Optionally, in some embodiments, a function of the first spatial relation configuration sub-information may be determined by the fourth enable state identifier. For example, in a case that the spatial relation configuration information includes the first spatial relation configuration sub-information and the fourth enable state identifier, it indicates that the fourth enable state identifier is associated with the first spatial relation configuration sub-information. In this case, if the fourth enable state identifier is a first value, this may indicate that the first spatial relation configuration sub-information is used only in a case that the terminal is in the connected state; or if the fourth enable state identifier is a second value, this may indicate that the first spatial relation configuration sub-information is used for the idle state or a non-idle state. Specifically, that the first spatial relation configuration sub-information is used for the idle state or a non-idle state may be understood as any one of the following:

the first power control sub-information is used only for the idle state or the non-idle state;
and

the first power control sub-information is used for the connected state, the idle state, or the non-idle state.

In this embodiment of this application, the first power control sub-information may include at least one of the following: an SSB, a PRS, a channel state information reference signal (Channel State Information Reference Signal, CSI-RS), and an SRS.

Optionally, the spatial relation configuration information further includes second spatial relation configuration sub-information, and the first spatial relation configuration sub-information and the second spatial relation configuration

10

sub-information meet at least one of the following: being spatial relation configurations of different positioning reference signals; and being spatial relation configurations of positioning reference signals in different states of the terminal.

It should be understood that, in this embodiment of this application, the fourth enable state identifier may be included in a piece of configuration sub-information. For example, the fourth enable state identifier may be carried in the second spatial relation configuration sub-information.

It should be noted that, in this embodiment of this application, the first spatial relation configuration sub-information and the second spatial relation configuration sub-information may belong to one configuration unit or two different configuration units.

In some embodiments, the first spatial relation configuration sub-information may be a spatial relation configuration of a positioning reference signal 1, and the second spatial relation configuration sub-information may be a spatial relation configuration of a positioning reference signal 2. The positioning reference signal 1 and the positioning reference signal 2 may be a same positioning reference signal, or may be different positioning reference signals. The first spatial relation configuration sub-information may be applicable to the terminal only in the connected state, and the second spatial relation configuration sub-information may be applicable to the terminal in the idle state, the inactive state, and the connected state, or the second spatial relation configuration sub-information may be applicable to the terminal only in the idle state and the inactive state.

In this embodiment of this application, the second spatial relation configuration sub-information may include at least one of the following: an SSB, a PRS, and the fourth enable state identifier.

Optionally, the first spatial relation configuration sub-information is used for a random access process, and/or the second spatial relation configuration sub-information is used for an SRS.

Optionally, the first spatial relation configuration sub-information and the second spatial relation configuration sub-information meet any one of the following:

the first spatial relation configuration sub-information and the second spatial relation configuration sub-information are included in fourth information, where the fourth information is serving cell configuration information or medium access control MAC information;
the first spatial relation configuration sub-information is included in fifth information, and the second spatial relation configuration sub-information is included in radio resource control RRC release information or third information, where the fifth information is system information block SIB information, MAC information, or random access channel Rach configuration information, and the third information includes serving cell configuration information, SRS configuration information, physical uplink shared channel PUSCH configuration information, or Rach configuration information; and
a first part of information of a first object is included in Rach configuration information, and a second part of information other than the first part of information in the first object is included in the fifth information, where
the first object includes at least one of the following: the first spatial relation configuration sub-information and the second spatial relation configuration sub-information.

Optionally, the first spatial relation configuration sub-information is used for transmitting an SRS in the connected state, and/or the second spatial relation configuration sub-information is used for transmitting an SRS in the idle state or the inactive state.

Optionally, the first spatial relation configuration sub-information is included in sixth information, and the second spatial relation configuration sub-information is included in RRC release information or SRS configuration information, where the sixth information includes third information, physical uplink shared channel PUSCH configuration information, or Rach configuration information, and the third information includes serving cell configuration information, SRS configuration information, PUSCH configuration information, or Rach configuration information.

Optionally, in some embodiments, at least one of the power configuration information and the spatial relation configuration information is included in RRC release information or third information, and the third information includes serving cell configuration information, SRS configuration information, PUSCH configuration information, or Rach configuration information.

Optionally, in some embodiments, a transmit power of the first positioning reference signal on the first BWP meets any one of the following:

that a first transmit power is determined based on an expected receive power value, a power adjustment coefficient, a transmission resource for the first positioning reference signal, a path loss value, or a maximum transmit power;
that a second transmit power is determined based on a second expected receive power, a maximum transmit power, a power ramping coefficient, or a counter, where the counter is used for recording the number of times of ramping based on the power ramping coefficient; and
that a third transmit power is determined based on a target transmit power and/or a power increment, where the target transmit power is the first transmit power, the second transmit power, or a predetermined transmit power.

The power increment may be specified in a protocol or configured by the network device. When target transmit powers are different, corresponding power increments may be the same or different.

In this embodiment of this application, the first transmit power meets any one of the following:

$$P_{SRS,b,f,c}(i,q_s) = \min \left\{ \begin{array}{l} P_{CMAX,f,c}(i), \\ P_{0\_SRS,b,f,c}(q_s) + \alpha_{SRS,b,f,c}(q_s) * PL_{b,f,c}(q_d) \end{array} \right\};$$

$$P_{SRS,b,f,c}(i,q_s,l) = \min \left\{ \begin{array}{l} P_{CMAX,f,c}(i), \\ P_{0\_SRS,b,f,c}(q_s) + 10\log_{10}(2^\mu * M_{SRS,b,f,c}(i) + \alpha_{SRS,b,f,c}(q_s) * PL_{b,f,c}(q_d) + h_{b,f,c}(i,l)) \end{array} \right\};$$

and

$$P_{SRS,b,f,c}(i,q_s) = \min \left\{ \begin{array}{l} P_{CMAX,f,c}(i), \\ P_{0\_SRS,b,f,c}(q_s) + 10\log_{10}(2^\mu * M_{SRS,b,f,c}(i) + \alpha_{SRS,b,f,c}(q_s) * PL_{b,f,c}(q_d) \end{array} \right\};$$

where
$q_s$ indicates the first positioning reference signal, $q_d$ indicates a path loss signal, b indicates the first BWP used for transmitting the first positioning reference signal, c indicates a serving cell or a cell to be camped on, f indicates a carrier, i indicates the i-th transmission, h indicates a power adjustment status, $\mu$ indicates a subcarrier configuration, $\alpha$ indicates the power adjustment coefficient, PL indicates the path loss value, $P_0$ indicates the expected receive power value, $P_{CMAX}$ indicates a maximum transmit power configured for the terminal, M indicates bandwidth of the first positioning reference signal, and $l$ indicates the number of times of adjustment.

It should be noted that, in another embodiment, the first transmit power may alternatively meet any one of the following:

$$P_{SRS,b,f,c}(i,q_s) = \min \left\{ \begin{array}{l} P_{CMAX,f,c}(i), \\ P_{0\_SRS,b,f,c}(q_s) + \alpha_{SRS,b,f,c}(q_s) * PL_{b,f,c} \end{array} \right\};$$

$$P_{SRS,b,f,c}(i,q_s,l) = \min \left\{ \begin{array}{l} P_{CMAX,f,c}(i), \\ P_{0\_SRS,b,f,c}(q_s) + 10\log_{10}(2^\mu * M_{SRS,b,f,c}(i) + \alpha_{SRS,b,f,c}(q_s) * PL_{b,f,c} + h_{b,f,c}(i,l)) \end{array} \right\};$$

$$P_{SRS,b,f,c}(i,q_s) = \min \left\{ \begin{array}{l} P_{CMAX,f,c}(i), \\ P_{0\_SRS,b,f,c}(q_s) + 10\log_{10}(2^\mu * M_{SRS,b,f,c}(i) + \alpha_{SRS,b,f,c}(q_s) * PL_{b,f,c} \end{array} \right\};$$

$$P_{SRS,b,f,c}(i) = \min \left\{ \begin{array}{l} P_{CMAX,f,c}(i), \\ P_{0\_SRS,b,f,c} + \alpha_{SRS,b,f,c} * PL_{b,f,c}(q_d) \end{array} \right\};$$

$$P_{SRS,b,f,c}(i,l) = \min \left\{ \begin{array}{l} P_{CMAX,f,c}(i), \\ P_{0\_SRS,b,f,c} + 10\log_{10}(2^\mu * M_{SRS,b,f,c}(i) + \alpha_{SRS,b,f,c} * PL_{b,f,c}(q_d) + h_{b,f,c}(i,l)) \end{array} \right\};$$

$$P_{SRS,b,f,c}(i) = \min\left\{ \begin{array}{l} P_{CMAX,f,c}(i), \\ P_{0\_SRS,b,f,c} + 10\log_{10}(2^{\mu} * M_{SRS,b,f,c}(i) + \alpha_{SRS,b,f,c} * PL_{b,f,c}(q_d)) \end{array} \right\};$$

$$P_{SRS,b,f,c}(i) = \min\left\{ \begin{array}{l} P_{CMAX,f,c}(i), \\ P_{0\_SRS,b,f,c} + \alpha_{SRS,b,f,c} * PL_{b,f,c} \end{array} \right\};$$

$$P_{SRS,b,f,c}(i,l) = \min\left\{ \begin{array}{l} P_{CMAX,f,c}(i), \\ P_{0\_SRS,b,f,c} + 10\log_{10}(2^{\mu} * M_{SRS,b,f,c}(i) + \alpha_{SRS,b,f,c} * PL_{b,f,c} + h_{b,f,c}(i,l)) \end{array} \right\};$$

and

$$P_{SRS,b,f,c}(i) = \min\left\{ \begin{array}{l} P_{CMAX,f,c}(i), \\ P_{0\_SRS,b,f,c} + 10\log_{10}(2^{\mu} * M_{SRS,b,f,c}(i) + \alpha_{SRS,b,f,c} * PL_{b,f,c} \end{array} \right\}.$$

Optionally, in this embodiment of this application, the second transmit power meets any one of the following:

$$P_{SRS,b,f,c}(i,q_s) = \min\left\{ \begin{array}{l} P_{CMAX}, \\ P_{target,b,f,c} + \alpha_{SRS,b,f,c}(q_s) * PL_{b,f,c} \end{array} \right\};$$

$$P_{SRS,b,f,c}(i,q_s) = \min\left\{ \begin{array}{l} P_{CMAX}, \\ P_{target,b,f,c} + PL_{b,f,c} \end{array} \right\};$$

and

$$P_{SRS,b,f,c}(i,q_s) = \min\left\{ \begin{array}{l} P_{CMAX}, \\ P_{target,b,f,c} + 10\log_{10}(2^{\mu} * M_{SRS,b,f,c}(i) + \alpha_{SRS,b,f,c}(q_s) * PL_{b,f,c}) \end{array} \right\};$$

where

$q_s$ indicates the first positioning reference signal, $q_d$ indicates a path loss signal, b indicates the first BWP used for transmitting the first positioning reference signal, c indicates a serving cell or a cell to be camped on, f indicates a carrier, i indicates the i-th transmission, $\mu$ indicates a subcarrier configuration, $\alpha$ indicates the power adjustment coefficient, PL indicates the path loss value, $P_{CMAX}$ indicates a maximum transmit power configured for the terminal, M indicates bandwidth of the first positioning reference signal, and $P_{target}$ indicates a target receive power.

It should be noted that, in another embodiment, the second transmit power may alternatively meet any one of the following:

$$P_{SRS,b,f,c}(i,q_s) = \min\left\{ \begin{array}{l} P_{CMAX}, \\ P_{target,b,f,c} + \alpha_{SRS,b,f,c}(q_s) * PL_{b,f,c}(q_d) \end{array} \right\};$$

$$P_{SRS,b,f,c}(i,q_s) = \min \left\{ \begin{array}{l} P_{CMAX}, \\ P_{\text{target},b,f,c} + PL_{b,f,c}(q_d) \end{array} \right\};$$

$$P_{SRS,b,f,c}(i,q_s) = \min \left\{ \begin{array}{l} P_{CMAX}, \\ P_{\text{target},b,f,c} + 10\log_{10}(2^{\mu} * M_{SRS,b,f,c}(i) + \alpha_{SRS,b,f,c}(q_s) * PL_{b,f,c}(q_d)) \end{array} \right\};$$

$$P_{SRS,b,f,c}(i) = \min \left\{ \begin{array}{l} P_{CMAX}, \\ P_{\text{target},b,f,c} + \alpha_{SRS,b,f,c} * PL_{b,f,c}(q_d) \end{array} \right\};$$

$$P_{SRS,b,f,c}(i) = \min \left\{ \begin{array}{l} P_{CMAX}, \\ P_{\text{target},b,f,c} + PL_{b,f,c}(q_d) \end{array} \right\};$$

$$P_{SRS,b,f,c}(i) = \min \left\{ \begin{array}{l} P_{CMAX}, \\ P_{\text{target},b,f,c} + 10\log_{10}(2^{\mu} * M_{SRS,b,f,c}(i) + \alpha_{SRS,b,f,c} * PL_{b,f,c}(q_d)) \end{array} \right\};$$

$$P_{SRS,b,f,c}(i) = \min \left\{ \begin{array}{l} P_{CMAX}, \\ P_{\text{target},b,f,c} + \alpha_{SRS,b,f,c} * PL_{b,f,c} \end{array} \right\};$$

$$P_{SRS,b,f,c}(i) = \min \left\{ \begin{array}{l} P_{CMAX}, \\ P_{\text{target},b,f,c} + PL_{b,f,c} \end{array} \right\};$$

and

$$P_{SRS,b,f,c}(i) = \min \left\{ \begin{array}{l} P_{CMAX}, \\ P_{\text{target},b,f,c} + 10\log_{10}(2^{\mu} * M_{SRS,b,f,c}(i) + \alpha_{SRS,b,f,c} * PL_{b,f,c}) \end{array} \right\}.$$

Optionally, in some embodiments, the target receive power is determined based on at least one of the second expected receive power the power ramping coefficient, and the counter. In other words, in this embodiment of this application, the network device determines the target receive power based on at least one of the second expected receive power, the power ramping coefficient, and the counter, where the target receive power is used for determining the transmit power of the first positioning reference signal on the first BWP. In this embodiment of this application, indicates the second expected receive power, $\beta$ indicates the power ramping coefficient, K indicates a value of the counter, and $\Delta$ indicates an increment. $\Delta$ may be configured by the network device, specified in a protocol, or set to 0.

Optionally, in some embodiments, the method further includes:
determining the path loss value based on a target reference signal, where the target reference signal is a reference signal indicated by the first configuration information or a preset reference signal.

In this embodiment of this application, the synchronization signal block SSB meeting the preset condition includes any one of the following:

an SSB with a maximum receive power;
an SSB associated with a physical downlink control channel (Physical downlink control channel, PDCCH);
an SSB associated with a to-be-transmitted preamble;

an SSB with a receive power greater than a preset value; and

an SSB having a quasi co-location QCL relationship with a target response message, where the target response message is a response message fed back by the network device for the first positioning reference signal.

Optionally, in some embodiments, in a case that a receive power of the target reference signal is less than a preset value or the target reference signal is not detected, the method further includes:

stopping transmitting the first positioning reference signal; or

transmitting the first positioning reference signal based on a maximum transmit power of the terminal.

It should be noted that, in this embodiment of this application, a power control method for the first positioning reference signal may be determined based on at least one of the following:

configuration information, for example, the power control method is determined based on power configuration information and a power control type that are configured;

stipulation in a protocol;

an activation status, for example, whether a specific or preset BWP is activated;

a first preset condition, for example, a first power is to be used in a case that a power is greater than a specific threshold;

a second preset condition, for example, a path loss signal received power is greater than a second threshold, and a reference signal received power (Reference Signal Received Power, RSRP) is greater than a third threshold; and

a preset path loss or transmit power.

Optionally, in some embodiments, determining of a power control method for the first positioning reference signal may be at least one of the following:

a window is started after an SRS is transmitted, and if a NACK is received within the window, a power is increased, or otherwise, the power remains unchanged; and

a window is started after an SRS is transmitted, and if no ACK is received within the window, a power is increased, or otherwise, the power remains unchanged, where

that a power is increased may be that an expected receive power or a transmit power in any power control is increased by a specific amount based on a specific transmit power.

Optionally, in some embodiments, the first positioning reference signal may be transmitted through beam scanning. That is, a spatial relation of N first positioning reference signals is determined based on the number of transmit beams of the terminal and/or a first preset rule, where the first preset rule indicates a correspondence between the first positioning reference signals and the transmit beams. In other words, any two of N beams that are in a one-to-one correspondence with the N first positioning reference signals have different directions, and the N beams are beams determined based on the spatial relation of the N first positioning reference signals.

Optionally, in some embodiments, at least one of the first configuration information and the second configuration information is carried in a second object, and the second object includes any one of the following: an RRC release message, an RRC release pause message, a paging message, a message 2, a message 4, a message B, downlink small data transmission, and preset SIB information used for positioning.

Optionally, in some embodiments, the method further includes:

transmitting, by the terminal, request information to the network device by using a third object, where the request information is used for requesting the network device to transmit at least one of the first configuration information and the second configuration information; and

the third object includes any one of the following: a preamble, a message 3, a message A, uplink small data transmission, and an uplink resource.

Optionally, in some embodiments, the request information includes at least one of the following: identification information of the terminal, a cell radio network temporary identifier, an identifier of the first positioning reference signal, a preset radio network temporary identifier, and a serving cell identifier. It should be noted that the request information may further include an original serving cell identifier in a case that the terminal is handed over.

It should be understood that the identifier of the first positioning reference signal may be understood as an index or a sequential index of the first positioning reference signal.

Optionally, in some embodiments, the power configuration information and the spatial relation configuration information of the first BWP and the first positioning reference signal are configured based on an area. For example, the UE receives an area-based cell list, RNA, or tracking area code (Tracking Area Code, TAC) configured by the network device, where all or some of positioning reference signal configurations in one cell list, RNA, or TAC are the same.

Optionally, in some embodiments, a collision rule for the first positioning reference signal includes at least one of the following:

in a case that a periodic first positioning reference signal or a first BWP collides with a preamble, the periodic first positioning reference signal is discarded, or the first BWP is not activated;

in a case that a periodic first positioning reference signal or a first BWP collides with an Msg3, the periodic first positioning reference signal is discarded, or the first BWP is not activated;

in a case that a periodic first positioning reference signal or a first BWP collides with an MsgA, the periodic first positioning reference signal is discarded, or the first BWP is not activated;

in a case that a periodic first positioning reference signal or a first BWP collides with small data transmission (Small Data Transmission, SDT), the periodic first positioning reference signal is discarded, or the first BWP is not activated;

in a case that a periodic first positioning reference signal or a first BWP collides with uplink SDT, the uplink SDT is discarded;

in a case that an aperiodic first positioning reference signal or a first BWP collides with a preamble, the aperiodic first positioning reference signal is discarded, or the first BWP is not activated;

in a case that an aperiodic first positioning reference signal or an active BWP collides with a preamble, the preamble is discard;

in a case that an aperiodic first positioning reference signal or a first BWP collides with an Msg3, the aperiodic first positioning reference signal is discarded, or the first BWP is not activated;

in a case that an aperiodic first positioning reference signal or a first BWP collides with an Msg3, the Msg3 is discarded;

in a case that an aperiodic first positioning reference signal or a first BWP collides with an MsgA, the aperiodic first positioning reference signal is discarded, or the first BWP is not activated;

in a case that an aperiodic first positioning reference signal or a first BWP collides with an MsgA, the MsgA is discarded;

in a case that an aperiodic first positioning reference signal or a first BWP collides with uplink SDT, the aperiodic first positioning reference signal is discarded, or the first BWP is not activated;

in a case that an aperiodic first positioning reference signal or a first BWP collides with uplink SDT, the uplink SDT is discarded;

in a case that a semi-persistent first positioning reference signal or a first BWP collides with a preamble, the semi-persistent first positioning reference signal is discarded, or the first BWP is not activated;

in a case that a semi-persistent first positioning reference signal or a first BWP collides with a preamble, the preamble is discard;

in a case that a semi-persistent first positioning reference signal or a first BWP collides with an Msg3, the semi-persistent first positioning reference signal is discarded, or the first BWP is not activated;

in a case that a semi-persistent first positioning reference signal or a first BWP collides with an Msg3, the Msg3 is discarded;

in a case that a semi-persistent first positioning reference signal or a first BWP collides with an MsgA, the semi-persistent first positioning reference signal is discarded, or the first BWP is not activated;

in a case that a semi-persistent first positioning reference signal or a first BWP collides with an MsgA, the MsgA is discarded;

in a case that a semi-persistent first positioning reference signal or a first BWP collides with uplink SDT, the semi-persistent first positioning reference signal is discarded, or the first BWP is not activated;

in a case that a semi-persistent first positioning reference signal collides with uplink SDT, the uplink SDT is discarded; and

determining is performed based on priorities of the first positioning reference signal and other signals, channels, or data, and a signal, a channel, or data with a lower priority is discarded.

It should be noted that, in some embodiments, the collision rule may further include a power control rule and a spatial relation control rule.

Optionally, the power control rule may include at least one of the following:

in a case that transmission resources of the first positioning reference signal and a colliding signal or channel do not overlap and a total transmit power of the first positioning reference signal and the colliding signal or channel exceeds a maximum transmit power, the number of first positioning reference signals to be transmitted may be reduced, or the first positioning reference signal may not be transmitted; and

in a case that transmission resources of the first positioning reference signal and a colliding signal or channel do not overlap and a total transmit power of the first positioning reference signal and the colliding signal or channel exceeds a maximum transmit power, the number of colliding signals or channels to be transmitted may be reduced, or the colliding signal or channel may not be transmitted. Optionally, the spatial relation control rule may include at least one of the following:

in a case that transmission resources of the first positioning reference signal and a colliding signal or channel do not overlap and spatial relations of the first positioning reference signal and the colliding signal or channel are different, only the first positioning reference signal is transmitted, and the colliding signal or channel is discarded;

in a case that transmission resources of the first positioning reference signal and a colliding signal or channel do not overlap and spatial relations of the first positioning reference signal and the colliding signal or channel are different, only the colliding signal or channel is transmitted, and the first positioning reference signal is discarded;

in a case that transmission resources of the first positioning reference signal and a colliding signal or channel do not overlap and spatial relations of the first positioning reference signal and the colliding signal or channel are different, whether the first positioning reference signal or the colliding signal or channel is to be transmitted is determined based on priorities of the spatial relations;

in a case that transmission resources of the first positioning reference signal and a colliding signal or channel do not overlap and spatial relations of the first positioning reference signal and the colliding signal or channel are different, the first positioning reference signal and the colliding signal or channel are transmitted based on a spatial relation of the first positioning reference signal;

in a case that transmission resources of the first positioning reference signal and a colliding signal or channel do not overlap and spatial relations of the first positioning reference signal and the colliding signal or channel are different, the first positioning reference signal and the colliding signal or channel are transmitted based on a spatial relation of the colliding signal or channel; and

in a case that transmission resources of the first positioning reference signal and a colliding signal or channel do not overlap and spatial relations of the first positioning reference signal and the colliding signal or channel are different, the first positioning reference signal and the colliding signal or channel are transmitted based on a target spatial relation, where the target spatial relation is determined based on priorities of the spatial relations.

Optionally, the first positioning reference signal and the colliding signal or channel may be represented as the first positioning reference signal and the colliding signal, or the first positioning reference signal and the colliding channel.

It should be understood that, that transmission resources do not overlap may be understood as that transmission REs of the first positioning reference signal and the colliding signal or channel are different, or may be understood as that frequency domain transmission resources of the first positioning reference signal and the colliding signal or channel are different. However, whether the resources are same symbols or have overlapping symbols in time domain is not limited.

For ease of understanding this application, the following describes in detail an implementation process of this application by using some specific examples.

Embodiment 1: An SRS is transmitted on an initial (initial) BWP. In this embodiment of this application, a terminal in an inactive or idle state still transmits an SRS on an active BWP, that is, the SRS is transmitted on the initial BWP.

Optionally, a network device may transmit indication information of a first target configuration, where the indication information includes at least one of the following:

cell indication information, for example, a serving cell ID, a cell ID, and carrier information;
configuration information of an initial uplink BWP; and
first SRS indication information.

The configuration information of the initial uplink BWP may include a BWP ID, BWP common information, and BWP dedicated information. The dedicated BWP information carries a first target configuration and/or a second target configuration of an uplink positioning reference signal, and dedicated configuration information used for the UE in the idle or inactive state.

The first SRS indication information may include identification information of a first SRS, for example, including an SRS resource ID and/or an SRS resource set ID.

The second target configuration may include at least one of the following:

second SRS identification information, for example, including an SRS resource ID and/or an SRS resource set ID;
indication information indicating that a second SRS can be used for the inactive state;
configuration information of the second SRS;

a serving cell ID; and
a BWP ID.

The configuration information of the second SRS may include power configuration information and/or spatial relation configuration information. The power configuration information may include a power configuration parameter and/or a power path loss reference signal, and the spatial relation configuration information may include a spatial relation reference signal.

Optionally, the first SRS is an SRS for a connected-state configuration, and the indication information of the first target configuration is used for indicating that the first SRS is used for the inactive state.

Optionally, the second SRS is an SRS for a release configuration, and is used only for the inactive state.

Optionally, the indication information of the first target configuration or the second target configuration is carried in RRC release information.

Optionally, the indication information of the first target configuration or the second target configuration is carried in RRC inactive configuration information.

Optionally, the RRC inactive configuration information is included in the RRC release information.

Embodiment 2: An SRS is transmitted on a dedicated initial BWP.

A difference between Embodiment 2 and Embodiment 1 lies in that configuration information of a dedicated initial uplink BWP is different from configuration information of an initial uplink BWP. For example, in this embodiment of this application, the configuration information of the dedicated initial uplink BWP may include:

a BWP ID;
BWP common information; and
BWP dedicated information, where the BWP dedicated information carries first SRS configuration information and/or second SRS configuration information.

Optionally, the terminal includes the following actions:

1. A BWP used for transmitting the SRS is different from an initial BWP. The difference includes one of the following: Time-frequency resources are different, and dedicated information is different. For example, the initial BWP does not include SRS configuration information, or SRS configuration information, for example, power configuration information, is different.
2. In a case that a BWP used for transmitting the SRS is different from a BWP used for transmitting a preamble or an MsgA, a time interval between the transmissions is greater than a threshold 1.
3. In a case that a BWP used for transmitting the SRS is different from a BWP used for transmitting a preamble or an MsgA, a time interval between the transmissions is less than a threshold 1, and the SBS is not expected to be transmitted.
4. In a case that a BWP resource used for transmitting the SRS is different from a downlink initial BWP, a time interval between a time at which the SRS is transmitted and a time at which paging is received is greater than a threshold 2.
5. In a case that a BWP resource used for transmitting the SRS is different from a downlink initial BWP, a time interval between a time at which the SRS is transmitted and a time at which paging is received is less than a threshold 2, and the SRS is not expected to be transmitted.
6. At a time at which the UE transmits the SRS or at a specific time, the dedicated initial uplink BWP is an active BWP. Optionally, at another time, the initial BWP is an active BWP. Optionally, in some embodiments, the dedicated initial uplink BWP is periodically activated based on an SRS cycle. Optionally, in some embodiments, the dedicated initial uplink BWP is periodically deactivated based on an SRS cycle. Optionally, in some embodiments, an activation time of the dedicated initial uplink BWP is related to a transmission time of the SRS.

Optionally, the dedicated initial uplink BWP is configured per serving cell. Dedicated initial uplink BWPs for serving cells of a same base station have a correspondence, for example, have a same time-frequency resource and/or same SRS configuration information.

Optionally, the configuration information of the dedicated initial uplink BWP is included in RRC release information, or is included in serving cell configuration information.

Embodiment 3: An SRS is transmitted on a BWP for positioning (positioning BWP).

A difference between Embodiment 3 and Embodiment 1 lies in that the SRS is transmitted on the positioning BWP in an inactive state, and therefore includes the following different information:

the positioning BWP is used for transmitting only a positioning signal or positioning information;

the positioning BWP is used for transmitting a positioning signal or positioning information only in the inactive state; and

configuration information of the positioning BWP.

The configuration information of the positioning BWP includes:

1. a BWP ID;
2. BWP common information;
3. BWP dedicated information, carrying first SRS configuration information and/or second SRS configuration information;
4. an enable identifier indicating that the BWP is used for positioning; and
5. an enable identifier indicating that the BWP is used for the inactive state.

Actions of a terminal are similar to those in Embodiment 2. For details, refer to the descriptions of the foregoing embodiment. For example, the dedicated initial BWP in Embodiment 2 may be replaced with the positioning BWP. Details are not described herein again.

Further, the positioning BWP is configured per serving cell. Positioning BWPs for serving cells of a same base station have a correspondence, in other words, may be decoupled from the serving cells, for example, may have a same time-frequency resource and/or same SRS configuration information.

Embodiment 4: In a case that a cell to be camped on changes, a configuration of an uplink positioning reference signal is updated. As shown in FIG. 2, the following process is included:

Step 301: A network device adds configuration information of an uplink positioning reference signal to an RRC release message or an RRC state suspend message.

Step 302: A terminal may transmit a preamble during switching of a cell to be camped on.

Step 303: The terminal receives a random access response (Random Access Response, RAR) transmitted by the network device.

Step 304: The terminal transmits an RRC resume request (RRC resume request) to the network device.

Step 305: The terminal receives a contention resolution (Contention Resolution).

Step 306: After the terminal successfully accesses a new cell, the network device re-transmits an RRC release message or an RRC state suspend message, where the RRC release message or the RRC state suspend message carries a first target configuration and/or a second target configuration of an uplink positioning reference signal.

Step 307: In a case that the terminal is in an idle state or an inactive state, the terminal transmits an SRS based on the new first target configuration and/or second target configuration.

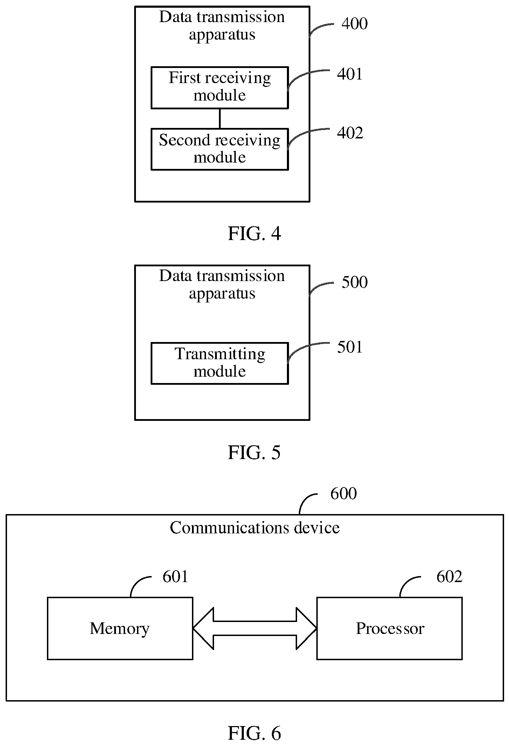

FIG. 4 is a flowchart of another uplink positioning processing method according to an embodiment of this application. The method is performed by a network device, and as shown in FIG. 4, includes the following steps:

Step 401: A network device transmits first configuration information, where the first configuration information is used for determining target information of a first positioning reference signal.

The first configuration information includes at least one of power configuration information and spatial relation configuration information. The target information includes a transmit power in a case that the first configuration information includes the power configuration information. The target information includes a spatial relation in a case that the first configuration information includes the spatial relation configuration information. The first positioning reference signal is used for a terminal to perform uplink positioning in an idle state or an inactive state.

Optionally, the method further includes:

receiving, on a first bandwidth part BWP, the first positioning reference signal transmitted by the terminal based on the target information.

Optionally, the first BWP is an active BWP of the terminal in a case that the terminal is in the idle state or the inactive state.

Optionally, the first BWP includes at least one of the following BWPs:

an initial BWP;
a dedicated initial BWP, where the dedicated initial BWP is used for performing uplink positioning only in a case that the terminal is in the idle state or the inactive state; and
a BWP for positioning.

Optionally, the method further includes:

transmitting, by the network device, second configuration information, where
the second configuration information includes at least one of first configuration sub-information and second configuration sub-information used by the terminal in the idle state or the inactive state, the first configuration sub-information is a configuration of the initial BWP, and the second configuration sub-information is a configuration of the dedicated initial BWP or the BWP for positioning.

Optionally, any one of the first configuration sub-information and the second configuration sub-information is activated in a case that the terminal is in the idle state or the inactive state.

Optionally, configuration information of the first BWP carries configuration information of a positioning reference signal.

Optionally, the configuration information of the positioning reference signal includes at least one of third configuration sub-information and fourth configuration sub-information in a case that the first BWP is the dedicated initial BWP or the BWP for positioning, where the third configuration sub-information is configuration information of a positioning reference signal used for uplink positioning in a case that the terminal is in the idle state or the inactive state, and the fourth configuration sub-information is configuration information of a positioning reference signal used for uplink positioning in a case that the terminal is in the connected state.

Optionally, the configuration information of the first BWP further includes at least one of a first enable state identifier and a second enable state identifier in a case that the first BWP is the BWP for positioning, where the first enable state identifier is used for indicating whether the BWP is used for positioning, and the second enable state indicator is used for indicating whether the BWP is used for the idle state or the inactive state.

Optionally, configuration information of the first BWP includes at least one of the following: a first enable state identifier, a second enable state identifier, configuration information of the first positioning reference signal, a BWP period, a BWP activation offset, and duration of a BWP activation window, where
the first enable state identifier is used for indicating whether the BWP is used for positioning, and the second enable state indicator is used for indicating whether the BWP is used for the idle state or the inactive state.

Optionally, the power configuration information includes at least one of the following:

first power configuration sub-information; and
a third enable state identifier, where
the third enable state identifier is used for indicating whether associated power configuration sub-information is used for the idle state or the inactive state of the terminal.

Optionally, the power configuration information further includes second power configuration sub-information, and the first power configuration sub-information and the second power configuration sub-information meet at least one of the following: being power configurations of different positioning reference signals; and being power configurations of positioning reference signals in different states of the terminal.

Optionally, the first power configuration sub-information is used for a random access process, and/or the second power configuration sub-information is used for an SRS.

Optionally, the first power configuration sub-information and the second power configuration sub-information meet any one of the following:

the first power configuration sub-information and the second power configuration sub-information are included in first information, where the first information is serving cell configuration information or medium access control MAC information;
the first power configuration sub-information is included in second information, and the second power configuration sub-information is included in radio resource control RRC release information or third information, where the second information is system information block SIB information, MAC information, or random access channel Rach configuration information, and the third information includes serving cell configuration information, SRS configuration information, physical uplink shared channel PUSCH configuration information, or Rach configuration information; and
a first part of information of a first object is included in Rach configuration information, and a second part of information other than the first part of information in the first object is included in the second information, where
the first object includes at least one of the following: the first power configuration sub-information and the second power configuration sub-information.

Optionally, the first power configuration sub-information is used for transmitting an SRS in the connected state, and/or the second power configuration sub-information is used for transmitting an SRS in the idle state or the inactive state.

Optionally, the first power configuration sub-information is included in fourth information, and the second power configuration sub-information is included in RRC release information or third information, where the fourth information includes serving cell configuration information, SRS configuration information, physical uplink shared channel PUSCH configuration information, Rach configuration information, or MAC information, and the third information includes serving cell configuration information, SRS configuration information, PUSCH configuration information, or Rach configuration information.

Optionally, the spatial relation configuration information includes at least one of the following:

first spatial relation configuration sub-information; and
a fourth enable state identifier, where
the fourth enable state identifier is used for indicating whether associated spatial relation configuration sub-information is used for the idle state or the inactive state of the terminal.

Optionally, the spatial relation configuration information further includes second spatial relation configuration sub-information, and the first spatial relation configuration sub-information and the second spatial relation configuration sub-information meet at least one of the following: being spatial relation configurations of different positioning reference signals; and being spatial relation configurations of positioning reference signals in different states of the terminal.

Optionally, the first spatial relation configuration sub-information is used for a random access process, and/or the second spatial relation configuration sub-information is used for an SRS.

Optionally, the first spatial relation configuration sub-information and the second spatial relation configuration sub-information meet any one of the following:

the first spatial relation configuration sub-information and the second spatial relation configuration sub-information are included in fourth information, where the fourth information is serving cell configuration information or medium access control MAC information;
the first spatial relation configuration sub-information is included in fifth information, and the second spatial relation configuration sub-information is included in radio resource control RRC release information or third information, where the fifth information is system information block SIB information, MAC information, or random access channel Rach configuration information, and the third information includes serving cell configuration information, SRS configuration information, physical uplink shared channel PUSCH configuration information, or Rach configuration information; and
a first part of information of a first object is included in Rach configuration information, and a second part of information other than the first part of information in the first object is included in the fifth information, where
the first object includes at least one of the following: the first spatial relation configuration sub-information and the second spatial relation configuration sub-information.

Optionally, the first spatial relation configuration sub-information is used for transmitting an SRS in the connected state, and/or the second spatial relation configuration sub-information is used for transmitting an SRS in the idle state or the inactive state.

Optionally, the first spatial relation configuration sub-information is included in sixth information, and the second spatial relation configuration sub-information is included in RRC release information or SRS configuration information, where the sixth information includes third information, physical uplink shared channel PUSCH configuration information, or Rach configuration information, and the third information includes serving cell configuration information, SRS configuration information, PUSCH configuration information, or Rach configuration information.

Optionally, at least one of the power configuration information and the spatial relation configuration information is included in RRC release information or third information, and the third information includes serving cell configuration information, SRS configuration information, PUSCH configuration information, or Rach configuration information.

Optionally, a transmit power of the first positioning reference signal on the first BWP meets any one of the following:

that a first transmit power is determined based on an expected receive power value, a power adjustment coefficient, a transmission resource for the first positioning reference signal, a path loss value, or a maximum transmit power;
that a second transmit power is determined based on a second expected receive power, a maximum transmit power, a power ramping coefficient, or a counter, where the counter is used for recording the number of times of ramping based on the power ramping coefficient; and
that a third transmit power is determined based on a target transmit power and/or a power increment, where the target transmit power is the first transmit power, the second transmit power, or a predetermined transmit power.

Optionally, the first transmit power meets any one of the following:

$$P_{SRS,b,f,c}(i,q_s) = \min \left\{ \begin{array}{l} P_{CMAX,f,c}(i), \\ P_{0\_SRS,b,f,c}(q_s) + \alpha_{SRS,b,f,c}(q_s) * PL_{b,f,c}(q_d) \end{array} \right\};$$

$$P_{SRS,b,f,c}(i,q_s,l) = \min \left\{ \begin{array}{l} P_{CMAX,f,c}(i), \\ P_{0\_SRS,b,f,c}(q_s) + 10\log_{10}(2^\mu * M_{SRS,b,f,c}(i) + \alpha_{SRS,b,f,c}(q_s) * PL_{b,f,c}(q_d) + h_{b,f,c}(i,l)) \end{array} \right\};$$

and

$$P_{SRS,b,f,c}(i,q_s) = \min \left\{ \begin{array}{l} P_{CMAX,f,c}(i), \\ P_{0\_SRS,b,f,c}(q_s) + 10\log_{10}(2^\mu * M_{SRS,b,f,c}(i) + \alpha_{SRS,b,f,c}(q_s) * PL_{b,f,c}(q_d) \end{array} \right\};$$

where

$q_s$ indicates the first positioning reference signal, $q_d$ indicates a path loss signal, b indicates the first BWP used for transmitting the first positioning reference signal, c indicates a serving cell or a cell to be camped on, f indicates a carrier, i indicates the i-th transmission, h indicates a power adjustment status, $\mu$ indicates a subcarrier configuration, $\alpha$ indicates the power adjustment coefficient, PL indicates the path loss value, $P_0$ indicates the expected receive power value, $P_{CMAX}$ indicates a maximum transmit power configured for the terminal, M indicates bandwidth of the first positioning reference signal, and $l$ indicates the number of times of adjustment.

Optionally, the second transmit power meets any one of the following:

$$P_{SRS,b,f,c}(i,q_s) = \min \left\{ \begin{array}{l} P_{CMAX}, \\ P_{target,b,f,c} + \alpha_{SRS,b,f,c}(q_s) * PL_{b,f,c} \end{array} \right\};$$

$$P_{SRS,b,f,c}(i,q_s) = \min \left\{ \begin{array}{l} P_{CMAX}, \\ P_{target,b,f,c} + PL_{b,f,c} \end{array} \right\};$$

and

$$P_{SRS,b,f,c}(i,q_s) = \min \left\{ \begin{array}{l} P_{CMAX}, \\ P_{target,b,f,c} + 10\log_{10}(2^\mu * M_{SRS,b,f,c}(i) + \alpha_{SRS,b,f,c}(q_s) * PL_{b,f,c}) \end{array} \right\};$$

where

$q_s$ indicates the first positioning reference signal, $q_d$ indicates a path loss signal, b indicates the first BWP used for transmitting the first positioning reference signal, c indicates a serving cell or a cell to be camped on, f indicates a carrier, i indicates the i-th transmission, $\mu$ indicates a subcarrier configuration, $\alpha$ indicates the power adjustment coefficient, PL indicates the path loss value, $P_{CMAX}$ indicates a maximum transmit power configured for the terminal, M indicates bandwidth of the first positioning reference signal, and $P_{target}$ indicates a target receive power.

Optionally, the target receive power is determined based on at least one of the second expected receive power the power ramping coefficient, and the counter.

Optionally, a spatial relation of N first positioning reference signals is determined based on the number of transmit beams of the terminal and/or a first preset rule, where the first preset rule indicates a correspondence between the first positioning reference signals and the transmit beams.

Optionally, at least one of the first configuration information and the second configuration information is carried in a second object, and the second object includes any one of the following: an RRC release message, an RRC release pause message, a paging message, a message 2, a message 4, a message B, downlink small data transmission, and preset SIB information used for positioning.

Optionally, the method further includes:

receiving, by the network device by using a third object, request information transmitted by the terminal, where the request information is used for requesting the network device to transmit at least one of the first configuration information and the second configuration information; and
the third object includes any one of the following: a preamble, a message 3, a message A, uplink small data transmission, and an uplink resource.

Optionally, the request information includes at least one of the following: identification information of the terminal, a cell radio network temporary identifier, an identifier of the first positioning reference signal, a preset radio network temporary identifier, and a serving cell identifier.

It should be noted that this embodiment is an embodiment of the network device corresponding to the embodiment shown in FIG. 2. For specific implementations of this embodiment, refer to related descriptions of the embodiment shown in FIG. 2, and the same beneficial effects are achieved. To avoid repetition, details are not described herein again.

It should be noted that the uplink positioning processing method provided in the embodiments of this application may be performed by an uplink positioning processingapparatus, or by a control module that is in the uplink positioning processing apparatus and that is configured to perform the uplink positioning processing method. In the embodiments of this application, an uplink positioning processing apparatus provided in the embodiments of this application is described by using an example in which the uplink positioning processing apparatus performs the uplink positioning processing method.

FIG. 5 is a structural diagram of an uplink positioning processing apparatus according to an embodiment of this application. As shown in FIG. 5, the uplink positioning processing apparatus 500 includes:

a first receiving module 501, configured to receive, by a terminal, first configuration information transmitted by a network device; and
a determining module 502, configured to determine, by the terminal, target information of a first positioning reference signal based on the first configuration information, where
the first configuration information includes at least one of power configuration information and spatial relation configuration information, the target information includes a transmit power in a case that the first configuration information includes the power configuration information, the target information includes a spatial relation in a case that the first configuration information includes the spatial relation configuration information, and the first positioning reference signal is used for the terminal to perform uplink positioning in an idle state or an inactive state.

Optionally, the first configuration information includes the power configuration information, and the determining module 502 includes:

a first determining unit, configured to determine a first bandwidth part BWP used for transmitting the first positioning reference signal; and
a second determining unit, configured to determine a transmit power of the first positioning reference signal based on the power configuration information and the first BWP.

Optionally, the first BWP is an active BWP of the terminal in a case that the terminal is in the idle state or the inactive state.

Optionally, the first BWP includes at least one of the following BWPs:

an initial BWP;
a dedicated initial BWP, where the dedicated initial BWP is used for performing uplink positioning only in a case that the terminal is in the idle state or the inactive state; and
a BWP for positioning.

Optionally, the first receiving module 501 is further configured to receive second configuration information transmitted by the network device, where
the second configuration information includes at least one of first configuration sub-information and second configuration sub-information used by the terminal in the idle state or the inactive state, the first configuration sub-information is a configuration of the initial BWP, and the second configuration sub-information is a configuration of the dedicated initial BWP or the BWP for positioning.

Optionally, any one of the first configuration sub-information and the second configuration sub-information is activated in a case that the terminal is in the idle state or the inactive state.

# EP 4 271 052 A1

Optionally, configuration information of the first BWP carries configuration information of a positioning reference signal.

Optionally, the configuration information of the positioning reference signal includes at least one of third configuration sub-information and fourth configuration sub-information in a case that the first BWP is the dedicated initial BWP or the BWP for positioning, where the third configuration sub-information is configuration information of a positioning reference signal used for uplink positioning in a case that the terminal is in the idle state or the inactive state, and the fourth configuration sub-information is configuration information of a positioning reference signal used for uplink positioning in a case that the terminal is in the connected state.

Optionally, the configuration information of the first BWP further includes at least one of a first enable state identifier and a second enable state identifier in a case that the first BWP is the BWP for positioning, where the first enable state identifier is used for indicating whether the BWP is used for positioning, and the second enable state indicator is used for indicating whether the BWP is used for the idle state or the inactive state.

Optionally, configuration information of the first BWP includes at least one of the following: a first enable state identifier, a second enable state identifier, configuration information of the first positioning reference signal, a BWP period, a BWP activation offset, and duration of a BWP activation window, where

the first enable state identifier is used for indicating whether the BWP is used for positioning, and the second enable state indicator is used for indicating whether the BWP is used for the idle state or the inactive state.

Optionally, the power configuration information includes at least one of the following:

first power configuration sub-information; and
a third enable state identifier, where
the third enable state identifier is used for indicating whether associated power configuration sub-information is used for the idle state or the inactive state of the terminal.

Optionally, the power configuration information further includes second power configuration sub-information, and the first power configuration sub-information and the second power configuration sub-information meet at least one of the following: being power configurations of different positioning reference signals; and being power configurations of positioning reference signals in different states of the terminal.

Optionally, the first power configuration sub-information is used for a random access process, and/or the second power configuration sub-information is used for an SRS.

Optionally, the first power configuration sub-information and the second power configuration sub-information meet any one of the following:

the first power configuration sub-information and the second power configuration sub-information are included in first information, where the first information is serving cell configuration information or medium access control MAC information;
the first power configuration sub-information is included in second information, and the second power configuration sub-information is included in radio resource control RRC release information or third information, where the second information is system information block SIB information, MAC information, or random access channel Rach configuration information, and the third information includes serving cell configuration information, SRS configuration information, physical uplink shared channel PUSCH configuration information, or Rach configuration information; and
a first part of information of a first object is included in Rach configuration information, and a second part of information other than the first part of information in the first object is included in the second information, where
the first object includes at least one of the following: the first power configuration sub-information and the second power configuration sub-information.

Optionally, the first power configuration sub-information is used for transmitting an SRS in the connected state, and/or the second power configuration sub-information is used for transmitting an SRS in the idle state or the inactive state.

Optionally, the first power configuration sub-information is included in fourth information, and the second power configuration sub-information is included in RRC release information or third information, where the fourth information includes serving cell configuration information, SRS configuration information, physical uplink shared channel PUSCH configuration information, Rach configuration information, or MAC information, and the third information includes serving cell configuration information, SRS configuration information, PUSCH configuration information, or Rach configuration information.

Optionally, the spatial relation configuration information includes at least one of the following:

first spatial relation configuration sub-information; and
a fourth enable state identifier, where

24

the fourth enable state identifier is used for indicating whether associated spatial relation configuration sub-information is used for the idle state or the inactive state of the terminal.

Optionally, the spatial relation configuration information further includes second spatial relation configuration sub-information, and the first spatial relation configuration sub-information and the second spatial relation configuration sub-information meet at least one of the following: being spatial relation configurations of different positioning reference signals; and being spatial relation configurations of positioning reference signals in different states of the terminal.

Optionally, the first spatial relation configuration sub-information is used for a random access process, and/or the second spatial relation configuration sub-information is used for an SRS.

Optionally, the first spatial relation configuration sub-information and the second spatial relation configuration sub-information meet any one of the following:

the first spatial relation configuration sub-information and the second spatial relation configuration sub-information are included in fourth information, where the fourth information is serving cell configuration information or medium access control MAC information;

the first spatial relation configuration sub-information is included in fifth information, and the second spatial relation configuration sub-information is included in radio resource control RRC release information or third information, where the fifth information is system information block SIB information, MAC information, or random access channel Rach configuration information, and the third information includes serving cell configuration information, SRS configuration information, physical uplink shared channel PUSCH configuration information, or Rach configuration information; and

a first part of information of a first object is included in Rach configuration information, and a second part of information other than the first part of information in the first object is included in the fifth information, where

the first object includes at least one of the following: the first spatial relation configuration sub-information and the second spatial relation configuration sub-information.

Optionally, the first spatial relation configuration sub-information is used for transmitting an SRS in the connected state, and/or the second spatial relation configuration sub-information is used for transmitting an SRS in the idle state or the inactive state.

Optionally, the first spatial relation configuration sub-information is included in sixth information, and the second spatial relation configuration sub-information is included in RRC release information or SRS configuration information, where the sixth information includes third information, physical uplink shared channel PUSCH configuration information, or Rach configuration information, and the third information includes serving cell configuration information, SRS configuration information, PUSCH configuration information, or Rach configuration information.

Optionally, at least one of the power configuration information and the spatial relation configuration information is included in RRC release information or third information, and the third information includes serving cell configuration information, SRS configuration information, PUSCH configuration information, or Rach configuration information.

Optionally, a transmit power of the first positioning reference signal on the first BWP meets any one of the following:

that a first transmit power is determined based on an expected receive power value, a power adjustment coefficient, a transmission resource for the first positioning reference signal, a path loss value, or a maximum transmit power;

that a second transmit power is determined based on a second expected receive power, a maximum transmit power, a power ramping coefficient, or a counter, where the counter is used for recording the number of times of ramping based on the power ramping coefficient; and

that a third transmit power is determined based on a target transmit power and/or a power increment, where the target transmit power is the first transmit power, the second transmit power, or a predetermined transmit power.

Optionally, the first transmit power meets any one of the following:

$$P_{SRS,b,f,c}(i,q_s) = \min \left\{ \begin{array}{l} P_{CMAX,f,c}(i), \\ P_{0\_SRS,b,f,c}(q_s) + \alpha_{SRS,b,f,c}(q_s) * PL_{b,f,c}(q_d) \end{array} \right\};$$

$$P_{SRS,b,f,c}(i,q_s,l) = \min \left\{ \begin{array}{l} P_{CMAX,f,c}(i), \\ P_{0\_SRS,b,f,c}(q_s) + 10\log_{10}(2^\mu * M_{SRS,b,f,c}(i) + \alpha_{SRS,b,f,c}(q_s) * PL_{b,f,c}(q_d) + h_{b,f,c}(i,l)) \end{array} \right\} ;$$

and

$$P_{SRS,b,f,c}(i,q_s) = \min \left\{ \begin{array}{l} P_{CMAX,f,c}(i), \\ P_{0\_SRS,b,f,c}(q_s) + 10\log_{10}(2^\mu * M_{SRS,b,f,c}(i) + \alpha_{SRS,b,f,c}(q_s) * PL_{b,f,c}(q_d)) \end{array} \right\} ;$$

where

$q_s$ indicates the first positioning reference signal, $q_d$ indicates a path loss signal, b indicates the first BWP used for transmitting the first positioning reference signal, c indicates a serving cell or a cell to be camped on, f indicates a carrier, i indicates the i-th transmission, h indicates a power adjustment status, $\mu$ indicates a subcarrier configuration, $\alpha$ indicates the power adjustment coefficient, PL indicates the path loss value, $P_0$ indicates the expected receive power value, $P_{CMAX}$ indicates a maximum transmit power configured for the terminal, M indicates bandwidth of the first positioning reference signal, and *l* indicates the number of times of adjustment.

Optionally, the second transmit power meets any one of the following:

$$P_{SRS,b,f,c}(i,q_s) = \min \left\{ \begin{array}{l} P_{CMAX}, \\ P_{target,b,f,c} + \alpha_{SRS,b,f,c}(q_s) * PL_{b,f,c} \end{array} \right\} ;$$

$$P_{SRS,b,f,c}(i,q_s) = \min \left\{ \begin{array}{l} P_{CMAX}, \\ P_{target,b,f,c} + PL_{b,f,c} \end{array} \right\} ;$$

and

$$P_{SRS,b,f,c}(i,q_s) = \min \left\{ \begin{array}{l} P_{CMAX}, \\ P_{target,b,f,c} + 10\log_{10}(2^\mu * M_{SRS,b,f,c}(i) + \alpha_{SRS,b,f,c}(q_s) * PL_{b,f,c}) \end{array} \right\} ;$$

where

$q_s$ indicates the first positioning reference signal, $q_d$ indicates a path loss signal, b indicates the first BWP used for transmitting the first positioning reference signal, c indicates a serving cell or a cell to be camped on, f indicates a carrier, i indicates the i-th transmission, $\mu$ indicates a subcarrier configuration, $\alpha$ indicates the power adjustment coefficient, PL indicates the path loss value, $P_{CMAX}$ indicates a maximum transmit power configured for the terminal, M indicates bandwidth of the first positioning reference signal, and $P_{target}$ indicates a target receive power.

Optionally, the target receive power is determined based on at least one of the second expected receive power the power ramping coefficient, and the counter.

Optionally, the determining module 502 is further configured to determine the path loss value based on a target reference signal, where the target reference signal is a reference signal indicated by the first configuration information or a preset reference signal.

Optionally, the preset reference signal is any one of the following: a SIB, a synchronization signal block SSB meeting a preset condition, and a default SSB.

Optionally, the synchronization signal block SSB meeting the preset condition includes any one of the following:

an SSB with a maximum receive power;
an SSB associated with a physical downlink control channel PDCCH;
an SSB associated with a to-be-transmitted preamble;
an SSB with a receive power greater than a preset value; and
an SSB having a quasi co-location QCL relationship with a target response message, where the target response message is a response message fed back by the network device for the first positioning reference signal.

Optionally, in a case that a receive power of the target reference signal is less than a preset value or the target reference signal is not detected, the uplink positioning processing apparatus 500 further includes:
a second transmitting module, configured to stop transmitting the first positioning reference signal, or transmit the first positioning reference signal based on a maximum transmit power of the terminal.

Optionally, a spatial relation of N first positioning reference signals is determined based on the number of transmit beams of the terminal and/or a first preset rule, where the first preset rule indicates a correspondence between the first positioning reference signals and the transmit beams.

Optionally, at least one of the first configuration information and the second configuration information is carried in a second object, and the second object includes any one of the following: an RRC release message, an RRC release pause message, a paging message, a message 2, a message 4, a message B, downlink small data transmission, and preset SIB information used for positioning.

Optionally, the uplink positioning processing apparatus 500 further includes:

a second transmitting module, configured to transmit, by the terminal, request information to the network device by using a third object, where the request information is used for requesting the network device to transmit at least one of the first configuration information and the second configuration information; and

the third object includes any one of the following: a preamble, a message 3, a message A, uplink small data transmission, and an uplink resource.

Optionally, the request information includes at least one of the following: identification information of the terminal, a cell radio network temporary identifier, an identifier of the first positioning reference signal, a preset radio network temporary identifier, and a serving cell identifier.

The uplink positioning processing apparatus 500 provided in this embodiment of this application is capable of implementing the processes implemented by the terminal in the method embodiment of FIG. 2. To avoid repetition, details are not described herein again.

FIG. 6 is a structural diagram of an uplink positioning processing apparatus according to an embodiment of this application. As shown in FIG. 6, the uplink positioning processing apparatus 600 includes:

a first transmitting module 601, configured to transmit, by a network device, first configuration information, where the first configuration information is used for determining target information of a first positioning reference signal, where

the first configuration information includes at least one of power configuration information and spatial relation configuration information, the target information includes a transmit power in a case that the first configuration information includes the power configuration information, the target information includes a spatial relation in a case that the first configuration information includes the spatial relation configuration information, and the first positioning reference signal is used for a terminal to perform uplink positioning in an idle state or an inactive state.

Optionally, the uplink positioning processing apparatus 600 further includes:
a second receiving module, configured to receive, on a first bandwidth part BWP, the first positioning reference signal transmitted by the terminal based on the target information.

Optionally, the first BWP is an active BWP of the terminal in a case that the terminal is in the idle state or the inactive state.

Optionally, the first BWP includes at least one of the following BWPs:

an initial BWP;

a dedicated initial BWP, where the dedicated initial BWP is used for performing uplink positioning only in a case that the terminal is in the idle state or the inactive state; and

a BWP for positioning.

Optionally, the first transmitting module 601 is further configured to transmit, by the network device, second configuration information, where

the second configuration information includes at least one of first configuration sub-information and second configuration sub-information used by the terminal in the idle state or the inactive state, the first configuration sub-information is a configuration of the initial BWP, and the second configuration sub-information is a configuration of the dedicated initial BWP or the BWP for positioning.

Optionally, any one of the first configuration sub-information and the second configuration sub-information is activated in a case that the terminal is in the idle state or the inactive state.

Optionally, configuration information of the first BWP carries configuration information of a positioning reference signal.

Optionally, the configuration information of the positioning reference signal includes at least one of third configuration sub-information and fourth configuration sub-information in a case that the first BWP is the dedicated initial BWP or the BWP for positioning, where the third configuration sub-information is configuration information of a positioning reference signal used for uplink positioning in a case that the terminal is in the idle state or the inactive state, and the fourth configuration sub-information is configuration information of a positioning reference signal used for uplink positioning in a case that the terminal is in the connected state.

Optionally, the configuration information of the first BWP further includes at least one of a first enable state identifier and a second enable state identifier in a case that the first BWP is the BWP for positioning, where the first enable state identifier is used for indicating whether the BWP is used for positioning, and the second enable state indicator is used for indicating whether the BWP is used for the idle state or the inactive state.

Optionally, configuration information of the first BWP includes at least one of the following: a first enable state identifier, a second enable state identifier, configuration information of the first positioning reference signal, a BWP period, a BWP activation offset, and duration of a BWP activation window, where
the first enable state identifier is used for indicating whether the BWP is used for positioning, and the second enable state indicator is used for indicating whether the BWP is used for the idle state or the inactive state.

Optionally, the power configuration information includes at least one of the following:

first power configuration sub-information; and
a third enable state identifier, where
the third enable state identifier is used for indicating whether associated power configuration sub-information is used for the idle state or the inactive state of the terminal.

Optionally, the power configuration information further includes second power configuration sub-information, and the first power configuration sub-information and the second power configuration sub-information meet at least one of the following: being power configurations of different positioning reference signals; and being power configurations of positioning reference signals in different states of the terminal.

Optionally, the first power configuration sub-information is used for a random access process, and/or the second power configuration sub-information is used for an SRS.

Optionally, the first power configuration sub-information and the second power configuration sub-information meet any one of the following:

the first power configuration sub-information and the second power configuration sub-information are included in first information, where the first information is serving cell configuration information or medium access control MAC information;
the first power configuration sub-information is included in second information, and the second power configuration sub-information is included in radio resource control RRC release information or third information, where the second information is system information block SIB information, MAC information, or random access channel Rach configuration information, and the third information includes serving cell configuration information, SRS configuration information, physical uplink shared channel PUSCH configuration information, or Rach configuration information; and
a first part of information of a first object is included in Rach configuration information, and a second part of information other than the first part of information in the first object is included in the second information, where
the first object includes at least one of the following: the first power configuration sub-information and the second power configuration sub-information.

Optionally, the first power configuration sub-information is used for transmitting an SRS in the connected state, and/or the second power configuration sub-information is used for transmitting an SRS in the idle state or the inactive state.

Optionally, the first power configuration sub-information is included in fourth information, and the second power configuration sub-information is included in RRC release information or third information, where the fourth information includes serving cell configuration information, SRS configuration information, physical uplink shared channel PUSCH configuration information, Rach configuration information, or MAC information, and the third information includes serving cell configuration information, SRS configuration information, PUSCH configuration information, or Rach configuration information.

Optionally, the spatial relation configuration information includes at least one of the following:

first spatial relation configuration sub-information; and

a fourth enable state identifier, where
the fourth enable state identifier is used for indicating whether associated spatial relation configuration sub-information is used for the idle state or the inactive state of the terminal.

Optionally, the spatial relation configuration information further includes second spatial relation configuration sub-information, and the first spatial relation configuration sub-information and the second spatial relation configuration sub-information meet at least one of the following: being spatial relation configurations of different positioning reference signals; and being spatial relation configurations of positioning reference signals in different states of the terminal.
Optionally, the first spatial relation configuration sub-information is used for a random access process, and/or the second spatial relation configuration sub-information is used for an SRS.
Optionally, the first spatial relation configuration sub-information and the second spatial relation configuration sub-information meet any one of the following:

the first spatial relation configuration sub-information and the second spatial relation configuration sub-information are included in fourth information, where the fourth information is serving cell configuration information or medium access control MAC information;
the first spatial relation configuration sub-information is included in fifth information, and the second spatial relation configuration sub-information is included in radio resource control RRC release information or third information, where the fifth information is system information block SIB information, MAC information, or random access channel Rach configuration information, and the third information includes serving cell configuration information, SRS configuration information, physical uplink shared channel PUSCH configuration information, or Rach configuration information; and
a first part of information of a first object is included in Rach configuration information, and a second part of information other than the first part of information in the first object is included in the fifth information, where
the first object includes at least one of the following: the first spatial relation configuration sub-information and the second spatial relation configuration sub-information.

Optionally, the first spatial relation configuration sub-information is used for transmitting an SRS in the connected state, and/or the second spatial relation configuration sub-information is used for transmitting an SRS in the idle state or the inactive state.
Optionally, the first spatial relation configuration sub-information is included sixth information, and the second spatial relation configuration sub-information is included in RRC release information or SRS configuration information, where the sixth information includes third information, physical uplink shared channel PUSCH configuration information, or Rach configuration information, and the third information includes serving cell configuration information, SRS configuration information, PUSCH configuration information, or Rach configuration information.
Optionally, at least one of the power configuration information and the spatial relation configuration information is included in RRC release information or third information, and the third information includes serving cell configuration information, SRS configuration information, PUSCH configuration information, or Rach configuration information.
Optionally, a transmit power of the first positioning reference signal on the first BWP meets any one of the following:

that a first transmit power is determined based on an expected receive power value, a power adjustment coefficient, a transmission resource for the first positioning reference signal, a path loss value, or a maximum transmit power;
that a second transmit power is determined based on a second expected receive power, a maximum transmit power, a power ramping coefficient, or a counter, where the counter is used for recording the number of times of ramping based on the power ramping coefficient; and
that a third transmit power is determined based on a target transmit power and/or a power increment, where the target transmit power is the first transmit power, the second transmit power, or a predetermined transmit power.

Optionally, the first transmit power meets any one of the following:

$$P_{SRS,b,f,c}(i,q_s) = \min \begin{Bmatrix} P_{CMAX,f,c}(i), \\ P_{0\_SRS,b,f,c}(q_s) + \alpha_{SRS,b,f,c}(q_s) * PL_{b,f,c}(q_d) \end{Bmatrix};$$

$$P_{SRS,b,f,c}(i,q_s,l) = \min \left\{ \begin{array}{l} P_{CMAX,f,c}(i), \\ P_{0\_SRS,b,f,c}(q_s) + 10\log_{10}(2^{\mu} * M_{SRS,b,f,c}(i) + \alpha_{SRS,b,f,c}(q_s) * PL_{b,f,c}(q_d) + h_{b,f,c}(i,l)) \end{array} \right\} ;$$

and

$$P_{SRS,b,f,c}(i,q_s) = \min \left\{ \begin{array}{l} P_{CMAX,f,c}(i), \\ P_{0\_SRS,b,f,c}(q_s) + 10\log_{10}(2^{\mu} * M_{SRS,b,f,c}(i) + \alpha_{SRS,b,f,c}(q_s) * PL_{b,f,c}(q_d)) \end{array} \right\} ;$$

where
$q_s$ indicates the first positioning reference signal, $q_d$ indicates a path loss signal, b indicates the first BWP used for transmitting the first positioning reference signal, c indicates a serving cell or a cell to be camped on, f indicates a carrier, i indicates the i-th transmission, h indicates a power adjustment status, $\mu$ indicates a subcarrier configuration, $\alpha$ indicates the power adjustment coefficient, PL indicates the path loss value, $P_0$ indicates the expected receive power value, $P_{CMAX}$ indicates a maximum transmit power configured for the terminal, M indicates bandwidth of the first positioning reference signal, and *l* indicates the number of times of adjustment.

Optionally, the second transmit power meets any one of the following:

$$P_{SRS,b,f,c}(i,q_s) = \min \left\{ \begin{array}{l} P_{CMAX}, \\ P_{target,b,f,c} + \alpha_{SRS,b,f,c}(q_s) * PL_{b,f,c} \end{array} \right\} ;$$

$$P_{SRS,b,f,c}(i,q_s) = \min \left\{ \begin{array}{l} P_{CMAX}, \\ P_{target,b,f,c} + PL_{b,f,c} \end{array} \right\} ;$$

and

$$P_{SRS,b,f,c}(i,q_s) = \min \left\{ \begin{array}{l} P_{CMAX}, \\ P_{target,b,f,c} + 10\log_{10}(2^{\mu} * M_{SRS,b,f,c}(i) + \alpha_{SRS,b,f,c}(q_s) * PL_{b,f,c}) \end{array} \right\} ;$$

where
$q_s$ indicates the first positioning reference signal, $q_d$ indicates a path loss signal, b indicates the first BWP used for transmitting the first positioning reference signal, c indicates a serving cell or a cell to be camped on, f indicates a carrier, i indicates the i-th transmission, $\mu$ indicates a subcarrier configuration, $\alpha$ indicates the power adjustment coefficient, PL indicates the path loss value, $P_{CMAX}$ indicates a maximum transmit power configured for the terminal, M indicates bandwidth of the first positioning reference signal, and $P_{target}$ indicates a target receive power.

Optionally, the target receive power is determined based on at least one of the second expected receive power the power ramping coefficient, and the counter.

Optionally, a spatial relation of N first positioning reference signals is determined based on the number of transmit beams of the terminal and/or a first preset rule, where the first preset rule indicates a correspondence between the first positioning reference signals and the transmit beams.

Optionally, at least one of the first configuration information and the second configuration information is carried in a second object, and the second object includes any one of the following: an RRC release message, an RRC release pause message, a paging message, a message 2, a message 4, a message B, downlink small data transmission, and preset SIB information used for positioning.

Optionally, the uplink positioning processing apparatus 600 further includes:

a second receiving module, configured to receive, by the network device by using a third object, request information transmitted by the terminal, where the request information is used for requesting the network device to transmit at least one of the first configuration information and the second configuration information; and

the third object includes any one of the following: a preamble, a message 3, a message A, uplink small data transmission, and an uplink resource.

Optionally, the request information includes at least one of the following: identification information of the terminal, a cell radio network temporary identifier, an identifier of the first positioning reference signal, a preset radio network temporary identifier, and a serving cell identifier.

The uplink positioning processing apparatus 600 provided in this embodiment of this application is capable of implementing the processes implemented by the network device in the method embodiment of FIG. 4. To avoid repetition, details are not described herein again.

The uplink positioning processing apparatus in the embodiments of this application may be an apparatus, or may be a component, an integrated circuit, or a chip in a terminal. The apparatus may be a mobile terminal or a non-mobile terminal. For example, the mobile terminal may include but is not limited to the aforementioned types of the terminal 11, and the non-mobile terminal may be a server, a network attached storage (Network Attached Storage, NAS), a personal computer (personal computer, PC), a television (television, TV), a teller machine, a self-service machine, or the like. This is not specifically limited in the embodiments of this application.

The uplink positioning processing apparatus in the embodiments of this application may be an apparatus with an operating system. The operating system may be an Android (Android) operating system, may be an iOS operating system, or may be another possible operating system. This is not specifically limited in the embodiments of this application.

The uplink positioning processing apparatus provided in the embodiments of this application is capable of implementing the processes implemented in the method embodiments of FIG. 2 to FIG. 4, with the same technical effects achieved. To avoid repetition, details are not described herein again.

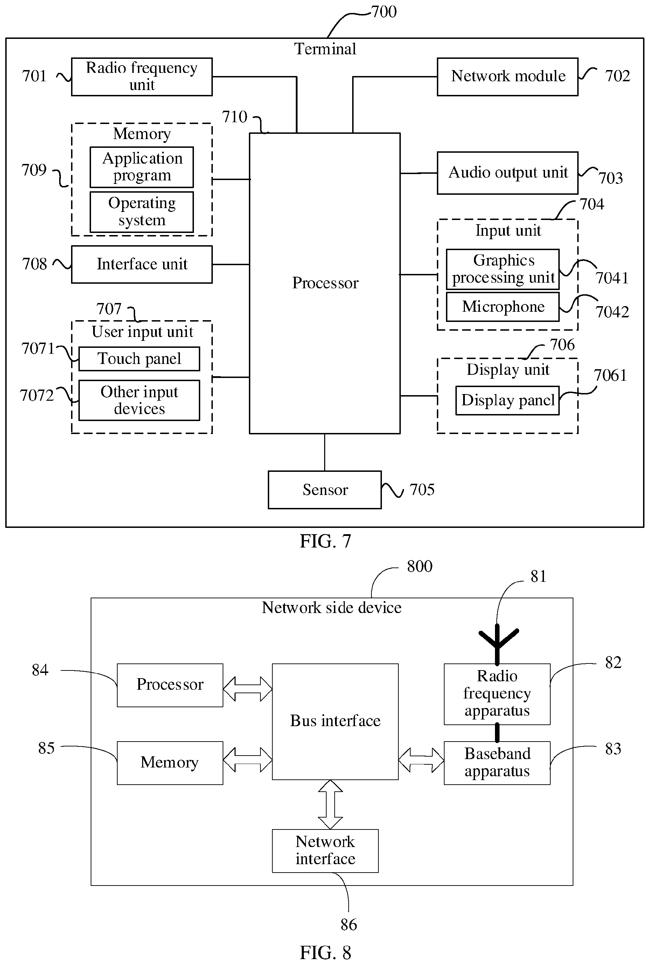

Optionally, as shown in FIG. 7, an embodiment of this application further provides a communications device 700, including a processor 701, a memory 702, and a program or instructions stored in the memory 702 and executable on the processor 701. When the program or instructions are executed by the processor 701, the processes of the foregoing uplink positioning processing method embodiments are implemented, with the same technical effects achieved.

FIG. 8 is a schematic diagram of a hardware structure of a terminal for implementing the embodiments of this application.

The terminal 800 includes but is not limited to components such as a radio frequency unit 801, a network module 802, an audio output unit 803, an input unit 804, a sensor 805, a display unit 806, a user input unit 807, an interface unit 808, a memory 809, and a processor 810.

Persons skilled in the art can understand that the terminal 800 may further include a power supply (for example, a battery) that supplies power to each component. The power supply may be logically connected to the processor 810 by using a power management system, to implement functions such as charging management, discharging management, and power consumption management by using the power management system. The terminal structure shown in FIG. 8 does not constitute a limitation on the terminal. The terminal may include more or fewer components than those shown in the figure, or some components may be combined, or there may be a different component layout. Details are not described herein again

It should be understood that, in this embodiment of this application, the input unit 804 may include a graphics processing unit (Graphics Processing Unit, GPU) 8041 and a microphone 8042. The graphics processing unit 8041 processes image data of a static picture or a video that is obtained by an image capture apparatus (for example, a camera) in a video capture mode or an image capture mode. The display unit 806 may include the display panel 8061. The display panel 8061 may be configured in a form of a liquid crystal display, an organic light-emitting diode, or the like. The user input unit 807 includes a touch panel 8071 and other input devices 8072. The touch panel 8071 is also referred to as a touchscreen. The touch panel 8071 may include two parts: a touch detection apparatus and a touch controller. The other input devices 8072 may include but are not limited to a physical keyboard, a function key (such as a volume control key or an on/off key), a trackball, a mouse, and a joystick. Details are not described herein.

In this embodiment of this application, the radio frequency unit 801 receives downlink data from a network device and then transmits the downlink data to the processor 810 for processing; and transmits uplink data to the network device. Usually, the radio frequency unit 801 includes but is not limited to an antenna, at least one amplifier, a transceiver, a coupler, a low noise amplifier, a duplexer, and the like.

The memory 809 may be configured to store software programs or instructions and various data. The memory 809 may mainly include a program or instruction storage region and a data storage region. The program or instruction storage region may store an operating system, an application program or instructions required by at least one function (for example, an audio play function or an image play function), and the like. In addition, the memory 809 may include a high-speed random access memory, or may include a non-volatile memory, where the non-volatile memory may be a read-only memory (Read-Only Memory, ROM), a programmable read-only memory (Programmable ROM, PROM), an erasable programmable read-only memory(Erasable PROM, EPROM), an electrically erasable programmable read-only memory (Electrically EPROM, EEPROM), or a flash memory, for example, at least one magnetic disk storage device, a flash memory, or another non-volatile solid-state storage device.

The processor 810 may include one or more processing units. Optionally, the processor 810 may integrate an application processor and a modem processor. The application processor mainly processes an operating system, a user interface, an application program or instructions, and the like. The modem processor mainly processes wireless communication, for example, a baseband processor. It may be understood that the modem processor may alternatively not be integrated in the processor 810.

The radio frequency unit 801 is configured to receive, by the terminal, first configuration information transmitted by the network device.

The processor 810 is configured to determine, by the terminal, target information of a first positioning reference signal based on the first configuration information.

The first configuration information includes at least one of power configuration information and spatial relation configuration information. The target information includes a transmit power in a case that the first configuration information includes the power configuration information. The target information includes a spatial relation in a case that the first configuration information includes the spatial relation configuration information. The first positioning reference signal is used for the terminal to perform uplink positioning in an idle state or an inactive state.

It should be noted that, in this embodiment, the processor 810 and the radio frequency unit 801 are capable of implementing the processes implemented by the terminal in the method embodiment of FIG. 2. To avoid repetition, details are not described herein again.

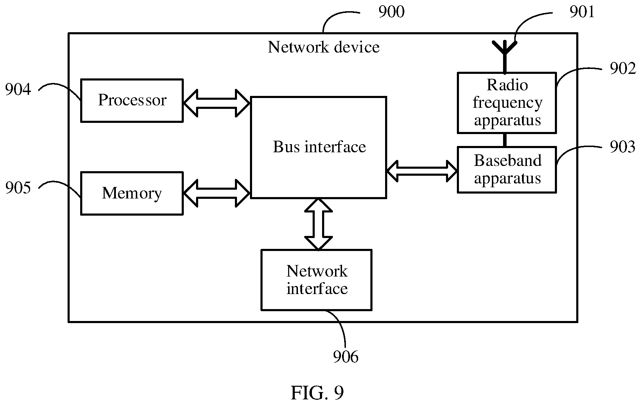

Specifically, an embodiment of this application further provides a network device. As shown in FIG. 9, the network device 900 includes an antenna 901, a radio frequency apparatus 902, and a baseband apparatus 903. The antenna 901 is connected to the radio frequency apparatus 902. In an uplink direction, the radio frequency apparatus 902 receives information through the antenna 901, and transmits the received information to the baseband apparatus 903 for processing. In a downlink direction, the baseband apparatus 903 processes to-be-transmitted information, and transmits the information to the radio frequency apparatus 902; and the radio frequency apparatus 902 processes the received information and then transmits the information through the antenna 901.

The frequency band processing apparatus may be located in the baseband apparatus 903. The method performed by the network device in the foregoing embodiment may be implemented by the baseband apparatus 903, and the baseband apparatus 903 includes a processor 904 and a memory 905.

The baseband apparatus 903 may include, for example, at least one baseband processing unit, where a plurality of chips are disposed on the baseband processing unit. As shown in FIG. 9, one of the chips is, for example, the processor 904, and connected to the memory 905, to invoke the program in the memory 905 to perform the operations of the network device shown in the foregoing method embodiments.

The baseband apparatus 903 may further include a network interface 906, configured to exchange information with the radio frequency apparatus 902, where the interface is, for example, a common public radio interface (common public radio interface, CPRI).

Specifically, the network device in this embodiment of this application further includes instructions or a program stored in the memory 905 and executable on the processor 904, and the processor 904 invokes the instructions or program in the memory 905 to perform the method performed by the modules shown in FIG. 6, with the same technical effects achieved. To avoid repetition, details are not described herein again.

An embodiment of this application further provides a readable storage medium. The readable storage medium may be non-volatile or volatile. The readable storage medium stores a program or instructions. When the program or instructions are executed by a processor, the processes of the foregoing uplink positioning processing method embodiments are implemented, with the same technical effects achieved. To avoid repetition, details are not described herein again.

The processor is a processor in the electronic device in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip. The chip includes a processor and a communications interface. The communications interface is coupled to the processor. The processor is configured to execute a program or instructions for a network device, to implement the processes of the foregoing uplink positioning processing method embodiments, with the same technical effects achieved. To avoid repetition, details are not described herein again.

It should be understood that the chip provided in this embodiment of this application may also be referred to as a system-level chip, a system on chip, a chip system, a system-on-a-chip, or the like.

An embodiment of this application further provides a computer program product. The computer program product is stored in a non-transitory readable storage medium. The computer program product is executed by at least one processor to implement the processes of the foregoing uplink positioning processing method embodiments, with the same technical effects achieved. To avoid repetition, details are not described herein again.

It should be noted that, in this specification, the terms "include" and "comprise", or any of their variants are intended to cover a non-exclusive inclusion, such that a process, a method, an article, or an apparatus that includes a list of elements not only includes those elements but also includes other elements that are not expressly listed, or further includes elements inherent to such a process, method, article, or apparatus. In absence of more constraints, an element preceded by "includes a..." does not preclude the existence of other identical elements in the process, method, article, or apparatus that includes the element. In addition, it should be noted that the scope of the method and apparatus in the implementations of this application is not limited to performing functions in the shown or described order, but may also include performing functions in a substantially simultaneous manner or in a reverse order depending on the functions involved. For example, the described method may be performed in an order different from that described, and steps may be added, omitted, or combined. In addition, features described with reference to some examples may be combined in other examples.

According to the foregoing description of the implementations, persons skilled in the art may clearly understand that the methods in the foregoing embodiments may be implemented by using software in combination with a necessary common hardware platform, and certainly may be alternatively implemented by using hardware. However, in most cases, the former is a preferred implementation. Based on such an understanding, the technical solutions of this application essentially or the part contributing to the related art may be implemented in a form of a software product. The computer software product may be stored in a storage medium (for example, a ROM/RAM, a magnetic disk, or a compact disc), and includes several instructions for instructing a terminal (which may be a mobile phone, a computer, a server, an air conditioner, a base station, or the like) to perform the methods described in the embodiments of this application.

The foregoing describes the embodiments of this application with reference to the accompanying drawings. However, this application is not limited to the foregoing specific implementations. The foregoing specific implementations are merely illustrative rather than restrictive. As instructed by this application, persons of ordinary skill in the art may develop many other manners without departing from principles of this application and the protection scope of the claims, and all such manners fall within the protection scope of this application.

**Claims**

1.  An uplink positioning processing method, comprising:

    receiving, by a terminal, first configuration information transmitted by a network device; and
    determining, by the terminal, target information of a first positioning reference signal based on the first configuration information, wherein
    the first configuration information comprises at least one of power configuration information and spatial relation configuration information, the target information comprises a transmit power in a case that the first configuration information comprises the power configuration information, the target information comprises a spatial relation in a case that the first configuration information comprises the spatial relation configuration information, and the first positioning reference signal is used for the terminal to perform uplink positioning in an idle state or an inactive state.

2.  The method according to claim 1, wherein the first configuration information comprises the power configuration information, and the determining, by the terminal, target information of a first positioning reference signal based on the first configuration information comprises:

    determining a first bandwidth part BWP used for transmitting the first positioning reference signal; and
    determining a transmit power of the first positioning reference signal based on the power configuration information and the first BWP.

3.  The method according to claim 2, wherein the first BWP is an active BWP of the terminal in a case that the terminal is in the idle state or the inactive state.

4.  The method according to claim 2, wherein the first BWP comprises at least one of the following BWPs:

    an initial BWP;
    a dedicated initial BWP, wherein the dedicated initial BWP is used for performing uplink positioning only in a case that the terminal is in the idle state or the inactive state; and
    a BWP for positioning.

5. The method according to claim 4, wherein the method further comprises:

receiving second configuration information transmitted by the network device, wherein
the second configuration information comprises at least one of first configuration sub-information and second configuration sub-information used by the terminal in the idle state or the inactive state, the first configuration sub-information is a configuration of the initial BWP, and the second configuration sub-information is a configuration of the dedicated initial BWP or the BWP for positioning.

6. The method according to claim 5, wherein any one of the first configuration sub-information and the second configuration sub-information is activated in a case that the terminal is in the idle state or the inactive state.

7. The method according to claim 4, wherein configuration information of the first BWP carries configuration information of a positioning reference signal.

8. The method according to claim 7, wherein the configuration information of the positioning reference signal comprises at least one of third configuration sub-information and fourth configuration sub-information in a case that the first BWP is the dedicated initial BWP or the BWP for positioning, wherein the third configuration sub-information is configuration information of a positioning reference signal used for uplink positioning in a case that the terminal is in the idle state or the inactive state, and the fourth configuration sub-information is configuration information of a positioning reference signal used for uplink positioning in a case that the terminal is in a connected state.

9. The method according to claim 7, wherein the configuration information of the first BWP further comprises at least one of a first enable state identifier and a second enable state identifier in a case that the first BWP is the BWP for positioning, wherein the first enable state identifier is used for indicating whether the BWP is used for positioning, and the second enable state identifier is used for indicating whether the BWP is used for the idle state or the inactive state.

10. The method according to claim 2, wherein configuration information of the first BWP comprises at least one of the following: a first enable state identifier, a second enable state identifier, configuration information of the first positioning reference signal, a BWP period, a BWP activation offset, and duration of a BWP activation window, wherein
the first enable state identifier is used for indicating whether the BWP is used for positioning, and the second enable state indicator is used for indicating whether the BWP is used for the idle state or the inactive state.

11. The method according to claim 1, wherein the power configuration information comprises at least one of the following:

first power configuration sub-information; and
a third enable state identifier, wherein
the third enable state identifier is used for indicating whether associated power configuration sub-information is used for the idle state or the inactive state of the terminal.

12. The method according to claim 11, wherein the power configuration information further comprises second power configuration sub-information, and the first power configuration sub-information and the second power configuration sub-information meet at least one of the following: being power configurations of different positioning reference signals; and being power configurations of positioning reference signals in different states of the terminal.

13. The method according to claim 12, wherein the first power configuration sub-information is used for a random access process, and/or the second power configuration sub-information is used for a sounding reference signal SRS.

14. The method according to claim 13, wherein the first power configuration sub-information and the second power configuration sub-information meet any one of the following:

the first power configuration sub-information and the second power configuration sub-information are comprised in first information, wherein the first information is serving cell configuration information or medium access control MAC information;
the first power configuration sub-information is comprised in second information, and the second power configuration sub-information is comprised in radio resource control RRC release information or third information, wherein the second information is system information block SIB information, MAC information, or random access channel Rach configuration information, and the third information comprises serving cell configuration information, SRS configuration information, physical uplink shared channel PUSCH configuration information, or Rach configuration information; and

a first part of information of a first object is comprised in Rach configuration information, and a second part of information other than the first part of information in the first object is comprised in the second information, wherein the first object comprises at least one of the following: the first power configuration sub-information and the second power configuration sub-information.

15. The method according to claim 12, wherein the first power configuration sub-information is used for transmitting an SRS in a connected state, and/or the second power configuration sub-information is used for transmitting an SRS in the idle state or the inactive state.

16. The method according to claim 15, wherein the first power configuration sub-information is comprised in fourth information, and the second power configuration sub-information is comprised in RRC release information or third information, wherein the fourth information comprises serving cell configuration information, SRS configuration information, physical uplink shared channel PUSCH configuration information, Rach configuration information, or MAC information, and the third information comprises serving cell configuration information, SRS configuration information, PUSCH configuration information, or Rach configuration information.

17. The method according to claim 1, wherein the spatial relation configuration information comprises at least one of the following:

first spatial relation configuration sub-information; and
a fourth enable state identifier, wherein
the fourth enable state identifier is used for indicating whether associated spatial relation configuration sub-information is used for the idle state or the inactive state of the terminal.

18. The method according to claim 17, wherein the spatial relation configuration information further comprises second spatial relation configuration sub-information, and the first spatial relation configuration sub-information and the second spatial relation configuration sub-information meet at least one of the following: being spatial relation configurations of different positioning reference signals; and being spatial relation configurations of positioning reference signals in different states of the terminal.

19. The method according to claim 18, wherein the first spatial relation configuration sub-information is used for a random access process, and/or the second spatial relation configuration sub-information is used for an SRS.

20. The method according to claim 19, wherein the first spatial relation configuration sub-information and the second spatial relation configuration sub-information meet any one of the following:

the first spatial relation configuration sub-information and the second spatial relation configuration sub-information are comprised in fourth information, wherein the fourth information is serving cell configuration information or medium access control MAC information;
the first spatial relation configuration sub-information is comprised in fifth information, and the second spatial relation configuration sub-information is comprised in radio resource control RRC release information or third information, wherein the fifth information is system information block SIB information, MAC information, or random access channel Rach configuration information, and the third information comprises serving cell configuration information, SRS configuration information, physical uplink shared channel PUSCH configuration information, or Rach configuration information; and
a first part of information of a first object is comprised in Rach configuration information, and a second part of information other than the first part of information in the first object is comprised in the fifth information, wherein the first object comprises at least one of the following: the first spatial relation configuration sub-information and the second spatial relation configuration sub-information.

21. The method according to claim 18, wherein the first spatial relation configuration sub-information is used for transmitting an SRS in a connected state, and/or the second spatial relation configuration sub-information is used for transmitting an SRS in the idle state or the inactive state.

22. The method according to claim 21, wherein the first spatial relation configuration sub-information is comprised in sixth information, and the second spatial relation configuration sub-information is comprised in RRC release information or SRS configuration information, wherein the sixth information comprises third information, physical uplink shared channel PUSCH configuration information, or Rach configuration information, and the third information comprises serving cell configuration information, SRS configuration information, PUSCH configuration information, or Rach configuration information.

23. The method according to claim 1, wherein at least one of the power configuration information and the spatial relation configuration information is comprised in RRC release information or third information, and the third information comprises serving cell configuration information, SRS configuration information, PUSCH configuration information, or Rach configuration information.

24. The method according to claim 1, wherein a transmit power of the first positioning reference signal on a first BWP meets any one of the following:

that a first transmit power is determined based on an expected receive power value, a power adjustment coefficient, a transmission resource for the first positioning reference signal, a path loss value, or a maximum transmit power;
that a second transmit power is determined based on a second expected receive power, a maximum transmit power, a power ramping coefficient, or a counter, wherein the counter is used for recording the number of times of ramping based on the power ramping coefficient; and
that a third transmit power is determined based on a target transmit power and/or a power increment, wherein the target transmit power is the first transmit power, the second transmit power, or a predetermined transmit power.

25. The method according to claim 24, wherein the first transmit power meets any one of the following:

$$P_{SRS,b,f,c}(i,q_s) = \min \left\{ \begin{array}{l} P_{CMAX,f,c}(i), \\ P_{0\_SRS,b,f,c}(q_s) + \alpha_{SRS,b,f,c}(q_s)*PL_{b,f,c}(q_d) \end{array} \right\} ;$$

$$P_{SRS,b,f,c}(i,q_s,l) = \min \left\{ \begin{array}{l} P_{CMAX,f,c}(i), \\ P_{0\_SRS,b,f,c}(q_s) + 10\log_{10}(2^{\mu}*M_{SRS,b,f,c}(i) + \alpha_{SRS,b,f,c}(q_s)*PL_{b,f,c}(q_d) + h_{b,f,c}(i,l)) \end{array} \right\} ;$$

and

$$P_{SRS,b,f,c}(i,q_s) = \min \left\{ \begin{array}{l} P_{CMAX,f,c}(i), \\ P_{0\_SRS,b,f,c}(q_s) + 10\log_{10}(2^{\mu}*M_{SRS,b,f,c}(i) + \alpha_{SRS,b,f,c}(q_s)*PL_{b,f,c}(q_d) \end{array} \right\} ;$$

wherein
$q_s$ indicates the first positioning reference signal, $q_d$ indicates a path loss signal, b indicates the first BWP used for transmitting the first positioning reference signal, c indicates a serving cell or a cell to be camped on, f indicates a carrier, i indicates the i-th transmission, h indicates a power adjustment status, $\mu$ indicates a subcarrier configuration, $\alpha$ indicates the power adjustment coefficient, PL indicates the path loss value, $P_0$ indicates the expected receive power value, $P_{CMAX}$ indicates a maximum transmit power configured for the terminal, M indicates bandwidth of the first positioning reference signal, and $l$ indicates the number of times of adjustment.

26. The method according to claim 24, wherein the second transmit power meets any one of the following:

$$P_{SRS,b,f,c}(i,q_s) = \min \left\{ \begin{array}{l} P_{CMAX}, \\ P_{target,b,f,c} + \alpha_{SRS,b,f,c}(q_s)*PL_{b,f,c} \end{array} \right\} ;$$

$$P_{SRS,b,f,c}(i,q_s) = \min\left\{ \begin{array}{l} P_{CMAX}, \\ P_{target,b,f,c} + PL_{b,f,c} \end{array}\right\};$$

and

$$P_{SRS,b,f,c}(i,q_s) = \min\left\{ \begin{array}{l} P_{CMAX}, \\ P_{target,b,f,c} + 10\log_{10}(2^{\mu} * M_{SRS,b,f,c}(i) + \alpha_{SRS,b,f,c}(q_s) * PL_{b,f,c}) \end{array}\right\};$$

wherein

$q_s$ indicates the first positioning reference signal, $q_d$ indicates a path loss signal, b indicates the first BWP used for transmitting the first positioning reference signal, c indicates a serving cell or a cell to be camped on, f indicates a carrier, i indicates the i-th transmission, $\mu$ indicates a subcarrier configuration, $\alpha$ indicates the power adjustment coefficient, PL indicates the path loss value, $P_{CMAX}$ indicates a maximum transmit power configured for the terminal, M indicates bandwidth of the first positioning reference signal, and $P_{target}$ indicates a target receive power.

27. The method according to claim 26, wherein the target receive power is determined based on at least one of the second expected receive power, the power ramping coefficient, and the counter.

28. The method according to claim 24, wherein the method further comprises:
determining the path loss value based on a target reference signal, wherein the target reference signal is a reference signal indicated by the first configuration information or a preset reference signal.

29. The method according to claim 28, wherein the preset reference signal is any one of the following: a SIB, a synchronization signal block SSB meeting a preset condition, and a default SSB.

30. The method according to claim 29, wherein the synchronization signal block SSB meeting the preset condition comprises any one of the following:

an SSB with a maximum receive power;
an SSB associated with a physical downlink control channel PDCCH;
an SSB associated with a to-be-transmitted preamble;
an SSB with a receive power greater than a preset value; and
an SSB having a quasi co-location QCL relationship with a target response message, wherein the target response message is a response message fed back by the network device for the first positioning reference signal.

31. The method according to claim 28, wherein in a case that a receive power of the target reference signal is less than a preset value or the target reference signal is not detected, the method further comprises:

stopping transmitting the first positioning reference signal; or
transmitting the first positioning reference signal based on a maximum transmit power of the terminal.

32. The method according to claim 1, wherein a spatial relation of N first positioning reference signals is determined based on the number of transmit beams of the terminal and/or a first preset rule, wherein the first preset rule indicates a correspondence between the first positioning reference signals and the transmit beams.

33. The method according to claim 5, wherein at least one of the first configuration information and the second configuration information is carried in a second object, and the second object comprises any one of the following: an RRC release message, an RRC release pause message, a paging message, a message 2, a message 4, a message B, downlink small data transmission, and preset SIB information used for positioning.

34. The method according to claim 33, wherein the method further comprises:

transmitting, by the terminal, request information to the network device by using a third object, wherein the request information is used for requesting the network device to transmit at least one of the first configuration information and the second configuration information; and

the third object comprises any one of the following: a preamble, a message 3, a message A, uplink small data transmission, and an uplink resource.

35. The method according to claim 34, wherein the request information comprises at least one of the following: identification information of the terminal, a cell radio network temporary identifier, an identifier of the first positioning reference signal, a preset radio network temporary identifier, and a serving cell identifier.

36. An uplink positioning processing method, comprising:

transmitting, by a network device, first configuration information, wherein the first configuration information is used for determining target information of a first positioning reference signal, wherein

the first configuration information comprises at least one of power configuration information and spatial relation configuration information, the target information comprises a transmit power in a case that the first configuration information comprises the power configuration information, the target information comprises a spatial relation in a case that the first configuration information comprises the spatial relation configuration information, and the first positioning reference signal is used for a terminal to perform uplink positioning in an idle state or an inactive state.

37. The method according to claim 36, wherein the method further comprises:
receiving, on a first bandwidth part BWP, the first positioning reference signal transmitted by the terminal based on the target information.

38. The method according to claim 37, wherein the first BWP is an active BWP of the terminal in a case that the terminal is in the idle state or the inactive state.

39. The method according to claim 38, wherein the first BWP comprises at least one of the following BWPs:

an initial BWP;
a dedicated initial BWP, wherein the dedicated initial BWP is used for performing uplink positioning only in a case that the terminal is in the idle state or the inactive state; and
a BWP for positioning.

40. The method according to claim 39, wherein the method further comprises:

transmitting, by the network device, second configuration information, wherein

the second configuration information comprises at least one of first configuration sub-information and second configuration sub-information used by the terminal in the idle state or the inactive state, the first configuration sub-information is a configuration of the initial BWP, and the second configuration sub-information is a configuration of the dedicated initial BWP or the BWP for positioning.

41. The method according to claim 40, wherein any one of the first configuration sub-information and the second configuration sub-information is activated in a case that the terminal is in the idle state or the inactive state.

42. The method according to claim 39, wherein configuration information of the first BWP carries configuration information of a positioning reference signal.

43. The method according to claim 42, wherein the configuration information of the positioning reference signal comprises at least one of third configuration sub-information and fourth configuration sub-information in a case that the first BWP is the dedicated initial BWP or the BWP for positioning, wherein the third configuration sub-information is configuration information of a positioning reference signal used for uplink positioning in a case that the terminal is in the idle state or the inactive state, and the fourth configuration sub-information is configuration information of a positioning reference signal used for uplink positioning in a case that the terminal is in a connected state.

44. The method according to claim 42, wherein the configuration information of the first BWP further comprises at least one of a first enable state identifier and a second enable state identifier in a case that the first BWP is the BWP for positioning, wherein the first enable state identifier is used for indicating whether the BWP is used for positioning, and the second enable state indicator is used for indicating whether the BWP is used for the idle state or the inactive state.

45. The method according to claim 37, wherein configuration information of the first BWP comprises at least one of the following: a first enable state identifier, a second enable state identifier, configuration information of the first positioning reference signal, a BWP period, a BWP activation offset, and duration of a BWP activation window, wherein the first enable state identifier is used for indicating whether the BWP is used for positioning, and the second enable state indicator is used for indicating whether the BWP is used for the idle state or the inactive state.

46. The method according to claim 36, wherein the power configuration information comprises at least one of the following:

first power configuration sub-information; and
a third enable state identifier, wherein
the third enable state identifier is used for indicating whether associated power configuration sub-information is used for the idle state or the inactive state of the terminal.

47. The method according to claim 46, wherein the power configuration information further comprises second power configuration sub-information, and the first power configuration sub-information and the second power configuration sub-information meet at least one of the following: being power configurations of different positioning reference signals; and being power configurations of positioning reference signals in different states of the terminal.

48. The method according to claim 47, wherein the first power configuration sub-information is used for a random access process, and/or the second power configuration sub-information is used for a sounding reference signal SRS.

49. The method according to claim 47, wherein the first power configuration sub-information is used for transmitting an SRS in a connected state, and/or the second power configuration sub-information is used for transmitting an SRS in the idle state or the inactive state.

50. The method according to claim 36, wherein the spatial relation configuration information comprises at least one of the following:

first spatial relation configuration sub-information; and
a fourth enable state identifier, wherein
the fourth enable state identifier is used for indicating whether associated spatial relation configuration sub-information is used for the idle state or the inactive state of the terminal.

51. The method according to claim 50, wherein the spatial relation configuration information further comprises second spatial relation configuration sub-information, and the first spatial relation configuration sub-information and the second spatial relation configuration sub-information meet at least one of the following: being spatial relation configurations of different positioning reference signals; and being spatial relation configurations of positioning reference signals in different states of the terminal.

52. The method according to claim 51, wherein the first spatial relation configuration sub-information is used for a random access process, and/or the second spatial relation configuration sub-information is used for an SRS.

53. The method according to claim 51, wherein the first spatial relation configuration sub-information is used for transmitting an SRS in a connected state, and/or the second spatial relation configuration sub-information is used for transmitting an SRS in the idle state or the inactive state.

54. The method according to claim 36, wherein at least one of the power configuration information and the spatial relation configuration information is comprised in RRC release information or third information, and the third information comprises serving cell configuration information, SRS configuration information, PUSCH configuration information, or Rach configuration information.

55. The method according to claim 36, wherein a transmit power of the first positioning reference signal on a first BWP meets any one of the following:

that a first transmit power is determined based on an expected receive power value, a power adjustment coefficient, a transmission resource for the first positioning reference signal, a path loss value, or a maximum transmit power;

that a second transmit power is determined based on a second expected receive power, a maximum transmit power, a power ramping coefficient, or a counter, wherein the counter is used for recording the number of times of ramping based on the power ramping coefficient; and

that a third transmit power is determined based on a target transmit power and/or a power increment, wherein the target transmit power is the first transmit power, the second transmit power, or a predetermined transmit power.

56. The method according to claim 55, wherein the method further comprises:
determining, by the network device, a target receive power based on at least one of the second expected receive power, the power ramping coefficient, and the counter, wherein the target receive power is used for determining the transmit power of the first positioning reference signal on the first BWP.

57. The method according to claim 36, wherein a spatial relation of N first positioning reference signals is determined based on the number of transmit beams of the terminal and/or a first preset rule, wherein the first preset rule indicates a correspondence between the first positioning reference signals and the transmit beams.

58. The method according to claim 40, wherein the method further comprises:

receiving, by the network device by using a third object, request information transmitted by the terminal, wherein the request information is used for requesting the network device to transmit at least one of the first configuration information and the second configuration information; and

the third object comprises any one of the following: a preamble, a message 3, a message A, uplink small data transmission, and an uplink resource.

59. The method according to claim 58, wherein the request information comprises at least one of the following: identification information of the terminal, a cell radio network temporary identifier, an identifier of the first positioning reference signal, a preset radio network temporary identifier, and a serving cell identifier.

60. An uplink positioning processing apparatus, comprising:

a first receiving module, configured to receive, by a terminal, first configuration information transmitted by a network device; and

a determining module, configured to determine, by the terminal, target information of a first positioning reference signal based on the first configuration information, wherein

the first configuration information comprises at least one of power configuration information and spatial relation configuration information, the target information comprises a transmit power in a case that the first configuration information comprises the power configuration information, the target information comprises a spatial relation in a case that the first configuration information comprises the spatial relation configuration information, and the first positioning reference signal is used for the terminal to perform uplink positioning in an idle state or an inactive state.

61. The apparatus according to claim 60, wherein the first configuration information comprises the power configuration information, and the determining module comprises:

a first determining unit, configured to determine a first bandwidth part BWP used for transmitting the first positioning reference signal; and

a second determining unit, configured to determine a transmit power of the first positioning reference signal based on the power configuration information and the first BWP.

62. An uplink positioning processing apparatus, comprising:

a first transmitting module, configured to transmit, by a network device, first configuration information, wherein the first configuration information is used for determining target information of a first positioning reference signal, wherein

the first configuration information comprises at least one of power configuration information and spatial relation configuration information, the target information comprises a transmit power in a case that the first configuration information comprises the power configuration information, the target information comprises a spatial relation in a case that the first configuration information comprises the spatial relation configuration information, and the first positioning reference signal is used for a terminal to perform uplink positioning in an idle state or an inactive state.

63. A terminal, comprising a memory, a processor, and a program stored in the memory and executable on the processor, wherein when the program is executed by the processor, the steps of the uplink positioning processing method according to any one of claims 1 to 35 are implemented.

64. A network device, comprising a memory, a processor, and a program or instructions stored in the memory and executable on the processor, wherein when the program or instructions are executed by the processor, the steps of the uplink positioning processing method according to any one of claims 36 to 59 are implemented.

65. A readable storage medium, wherein the readable storage medium stores a program or instructions, and when the program or instructions are executed by a processor, the steps of the uplink positioning processing method according to any one of claims 1 to 59 are implemented.

66. A chip, comprising a processor and a communications interface, wherein the communications interface is coupled to the processor, and the processor is configured to execute a program or instructions, to implement the steps of the uplink positioning processing method according to any one of claims 1 to 59.

67. A computer program product, wherein the computer program product is stored in a non-transitory storage medium, and the computer program product is executed by at least one processor to implement the steps of the data transmission method according to any one of claims 1 to 59.

68. A communications device, configured to perform the steps of the data transmission method according to any one of claims 1 to 59.

Network device

11      11

Terminal

Terminal

FIG. 1

Start

Receive configuration information of a target transmission mode for a multicast service     201

Continuously receive service data based on the configuration information of the target transmission mode     202

End

FIG. 2

Start

Transmit configuration information of a target transmission mode for a multicast service to a terminal, where the configuration information is used for indicating the terminal to continuously receive service data based on the target transmission mode     301

End

FIG. 3

Data transmission apparatus — 400

First receiving module — 401

Second receiving module — 402

FIG. 4

Data transmission apparatus — 500

Transmitting module — 501

FIG. 5

600

Communications device

601

Memory

602

Processor

FIG. 6

FIG. 7

FIG. 8

FIG. 9

## INTERNATIONAL SEARCH REPORT

| International application No. |
| --- |
| **PCT/CN2021/140733** |

**A. CLASSIFICATION OF SUBJECT MATTER**

H04W 52/02(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT; WPABSC; OETXT; EPTXT; USTXT; ENTXT; WOTXT; ENTXTC; VCN; 3GPP: 功率, 上行, 空间关系, 定位参考信号, 空间, 空闲态, 非激活态, 定位, 部分带宽, 激活, 释放, 配置, LMF, idle, NRPPA, UL, BWP, SRS, power, RACH, preamble

**C. DOCUMENTS CONSIDERED TO BE RELEVANT**

| Category* | Citation of document, with indication, where appropriate, of the relevant passages | Relevant to claim No. |
| --- | --- | --- |
| PX | CN 112787780 A (VIVO COMMUNICATION TECHNOLOGY CO., LTD.) 11 May 2021 (2021-05-11) description paragraphs [0050]-[0830] | 1-65 |
| X | CN 111278116 A (VIVO COMMUNICATION TECHNOLOGY CO., LTD.) 12 June 2020 (2020-06-12) description paragraphs [0106]-[0413] | 1-65 |
| X | CN 111586855 A (HUAWEI TECHNOLOGIES CO., LTD.) 25 August 2020 (2020-08-25) description paragraphs [0129]-[0401] | 1-65 |
| A | CN 111278088 A (VIVO COMMUNICATION TECHNOLOGY CO., LTD.) 12 June 2020 (2020-06-12) entire document | 1-65 |
| A | US 2020267685 A1 (SAMSUNG ELECTRONICS CO., LTD.) 20 August 2020 (2020-08-20) entire document | 1-65 |

☐ Further documents are listed in the continuation of Box C.   ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **23 February 2022** | **04 March 2022** |

| Name and mailing address of the ISA/CN | Authorized officer |
| --- | --- |
| **China National Intellectual Property Administration (ISA/CN)** No. 6, Xitucheng Road, Jimenqiao, Haidian District, Beijing 100088, China | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/140733**

| Patent document cited in search report | | | Publication date (day/month/year) | Patent family member(s) | | | Publication date (day/month/year) |
|---|---|---|---|---|---|---|---|
| CN | 112787780 | A | 11 May 2021 | WO | 2021088970 | A1 | 14 May 2021 |
| CN | 111278116 | A | 12 June 2020 | KR | 20210102425 | A | 19 August 2021 |
| | | | | WO | 2020134188 | A1 | 02 July 2020 |
| | | | | EP | 3905812 | A1 | 03 November 2021 |
| | | | | US | 2021329474 | A1 | 21 October 2021 |
| | | | | IN | 202147032828 | A | 30 July 2021 |
| CN | 111586855 | A | 25 August 2020 | US | 2021377904 | A1 | 02 December 2021 |
| | | | | EP | 3923651 | A1 | 15 December 2021 |
| | | | | WO | 2020164334 | A1 | 20 August 2020 |
| CN | 111278088 | A | 12 June 2020 | WO | 2020140725 | A1 | 09 July 2020 |
| | | | | US | 2021329443 | A1 | 21 October 2021 |
| | | | | EP | 3908012 | A1 | 10 November 2021 |
| | | | | KR | 20210099122 | A | 11 August 2021 |
| | | | | IN | 202147030720 | A | 16 July 2021 |
| US | 2020267685 | A1 | 20 August 2020 | WO | 2020167073 | A1 | 20 August 2020 |
| | | | | US | 11206632 | B2 | 21 December 2021 |
| | | | | KR | 20200099500 | A | 24 August 2020 |
| | | | | GB | 2581480 | A | 26 August 2020 |
| | | | | EP | 3918854 | A1 | 08 December 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011546194